(19) Europäisches Patentamt
European Patent Office
Office européen des brevets

(11) EP 4 513 990 A1

(12) **EUROPEAN PATENT APPLICATION**
published in accordance with Art. 153(4) EPC

(43) Date of publication:
26.02.2025 Bulletin 2025/09

(21) Application number: 22938540.6

(22) Date of filing: 22.04.2022

(51) International Patent Classification (IPC):
*H04W 56/00* (2009.01)    *H04W 36/08* (2009.01)
*H04W 84/06* (2009.01)

(52) Cooperative Patent Classification (CPC):
H04W 36/08; H04W 56/00; H04W 84/06

(86) International application number:
PCT/JP2022/018501

(87) International publication number:
WO 2023/203740 (26.10.2023 Gazette 2023/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Panasonic Intellectual Property
Corporation
of America
Torrance, CA 90504 (US)

(72) Inventors:
• NISHIO, Akihiko
  Kadoma-shi, Osaka 571-0057 (JP)
• SUZUKI, Hidetoshi
  Kadoma-shi, Osaka 571-0057 (JP)

(74) Representative: Grünecker Patent- und
Rechtsanwälte
PartG mbB
Leopoldstraße 4
80802 München (DE)

(54) **TERMINAL, BASE STATION, AND COMMUNICATION METHOD**

(57) This terminal comprises: a reception circuit that receives control information regarding a reference point for a reference time in control of the transmission timing of an uplink signal in a first cell to a second cell different from the first cell; and a control circuit that controls the transmission timing on the basis of the control information.

FIG. 8

**Description**

Technical Field

The present disclosure relates to a terminal, a base station, and a communication method.

Background Art

In the standardization of 5G, New Radio access technology (NR) was specified in 3GPP, and specification of Release 15 (Rel. 15) of NR was published.

Citation List

Non Patent Literature

NPL 1
3GPP, TR 38.821, V16.1.0 "Solutions for NR to support non-terrestrial networks (NTN) (Release 16)," 2021-05

Summary of Invention

However, there is room for further study on a method for improving the accuracy of control on a transmission timing for a signal.
One non-limiting and exemplary embodiment of the present disclosure facilitates providing a terminal, a base station, and a communication method each capable of improving the accuracy of control on a transmission timing for a signal.
A terminal according to an exemplary embodiment of the present disclosure includes: reception circuitry, which, in operation, receives, in a first cell, control information on a reference point for a reference time in control on a transmission timing for an uplink signal to a second cell that is different from the first cell; and control circuitry, which, in operation, controls the transmission timing based on the control information.
It should be noted that general or specific embodiments may be implemented as a system, an apparatus, a method, an integrated circuit, a computer program, a storage medium, or any selective combination thereof.
According to a non-limiting and exemplary embodiment of the present disclosure, it is possible to improve the accuracy of control on a transmission timing for a signal.
Additional benefits and advantages of the disclosed aspects will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an example of delay estimation in a service link and a feeder link;
FIG. 2 is a sequence diagram illustrating an exemplary conditional handover;
FIG. 3 illustrates an example of handover;
FIG. 4 is a block diagram illustrating a configuration example focused on part of a base station;
FIG. 5 is a block diagram illustrating a configuration example focused on part of a terminal;
FIG. 6 is a block diagram illustrating a configuration example of the base station;
FIG. 7 is a block diagram illustrating a configuration example of the terminal;
FIG. 8 illustrates another example of handover;
FIG. 9 illustrates still another example of handover;
FIG. 10 illustrates still another example of handover;
FIG. 11 illustrates yet another example of handover;
FIG. 12 illustrates an exemplary method for identifying epoch time;
FIG. 13 illustrates another exemplary method for identifying the epoch time;
FIG. 14 illustrates an exemplary indication of assistance information;
FIG. 15 illustrates an exemplary architecture of a 3GPP NR system;
FIG. 16 is a schematic view illustrating functional split between NG-RAN and 5GC;

FIG. 17 is a sequence diagram of procedures for a setup/reconfiguration of radio resource control (RRC) connection;
FIG. 18 is a schematic diagram illustrating usage scenarios of enhanced mobile broadband (eMBB), massive machine type communications (mMTC), and ultra reliable and low latency communications (URLLC); and
FIG. 19 is a block diagram illustrating an exemplary 5G system architecture for a non-roaming scenario.

Description of Embodiments

Hereinafter, embodiments of the present disclosure will be described in detail with reference to the accompanying drawings.

[Regarding Non-Terrestrial Network (NTN)]

NR Rel. 15 has been specified as a radio access technology for terrestrial networks. Meanwhile, an extension of NR to a non-terrestrial network (NTN) such as communication using a satellite and/or a high-altitude platform station (HAPS) has been studied (e.g., NPL 1).
In the NTN environment, a coverage area (e.g., one or more cells) of a satellite for a terminal (may be also referred to as, e.g., user equipment (UE)) on the ground or a terminal located in airspace, such as an aircraft or drone, is formed by a beam from the satellite. In addition, a round trip time (RTT) of radio wave propagation between the terminal and the satellite is determined depending on the altitude of the satellite (e.g., approximately up to 36000 km) and the angle viewed from the terminal, that is, the positional relation between the satellite and the terminal.
For example, NPL 1 mentions that the round trip time (RTT) of radio wave propagation between a base station and a terminal takes up to approximately 540 ms in NTN.
Further, NPL 1 mentions that, in NTN, a differential delay up to approximately 10 ms (e.g., difference between farthest location and closest location from satellite in beam) arises in accordance with a location of a terminal in a beam (or coverage area or cell).
In addition, for example, in the case of a non-geostationary satellite such as a low-earth orbit satellite (LEO), the amount of a propagation delay varies more rapidly than in the terrestrial network because the satellite moves at a high speed of approximately 7.6 km per second.

(Timing Control)

In NR, for example, in order to align reception timings at a base station (e.g., also referred to as gNB) of signals transmitted from terminals, each of the terminal performs timing control (e.g., timing adjustment) that is based on information (e.g., referred to as "Timing Advance (TA) command") indicated (notified) by the base station for correcting (adjusting) a timing.
In NTN, since the amount of the propagation delay varies more rapidly than in the terrestrial network as described above, a terminal calculates the round-trip delay time between the terminal and a base station, corrects the timing, and thereby transmits a signal.

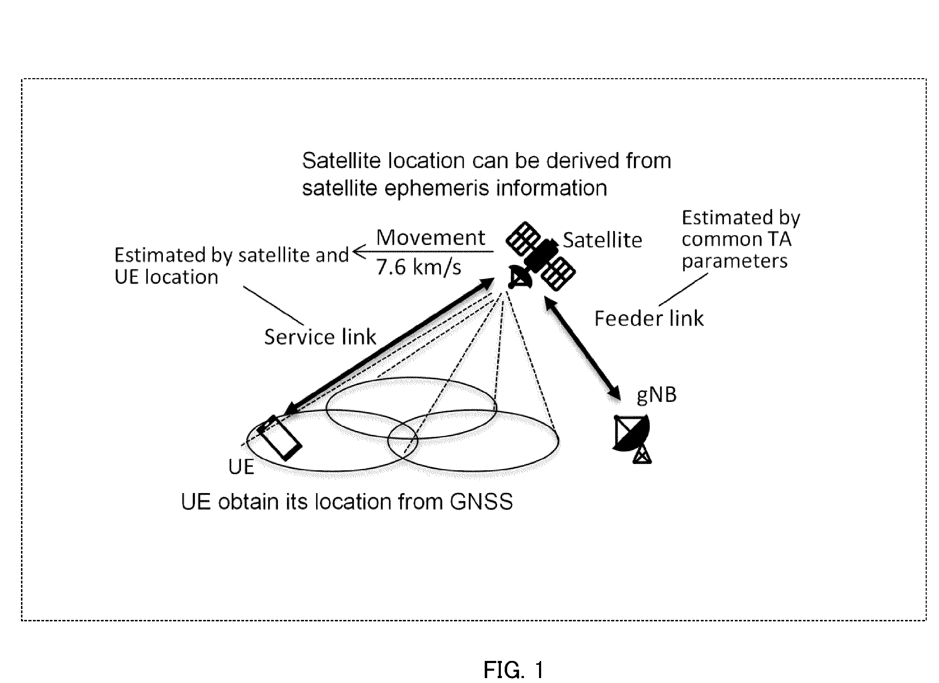

FIG. 1 is illustrates an example of processing (e.g., estimation processing of delay time) in NTN.
Delay time of a radio link between a terminal and a satellite (e.g., referred to as "service link") may be calculated based on, for example, location information on the terminal and information on an orbit or a location of the satellite. Note that the location information on the terminal may be acquired by, for example, a Global Navigation Satellite System (GNSS) or the like at the terminal. Further, the information on the orbit or location of the satellite may be indicated (e.g., broadcast) from a base station to the terminal as "satellite ephemeris information (or satellite ephemeris)," for example.
Meanwhile, delay time of a radio link between a base station or a gateway (GW) on the ground and a satellite (e.g., referred to as "feeder link") may be calculated, at the terminal, based on a common TA parameter broadcast from the base station, for example.
The delay time of the feeder link varies as the satellite moves, so that information on the amount of variation in the delay time, such as a common TA drift and the amount of variation in the common TA drift (common TA drift variation) may be indicated to the terminal as the common TA parameter, in addition to the delay time of the feeder link at a certain point, for example.
As described above, in NTN, the round trip delay time of the service link and the feeder link are corrected (e.g., compensated) on a side of the terminal, and an uplink signal is thus transmitted. This allows the signal transmitted from each terminal to be received within a predetermined time-difference at the base station.

(Regarding Control Information for NTN)

As control information for NTN from the base station to the terminal, at least one of the following information/-

parameters may be included. The control information for NTN may be indicated to the terminal by, for example, broadcast information such as a System Information Block (SIB).

- Ephemeris; Satellite ephemeris information;
- Common TA parameters; Common TA parameter;
- Epoch time; Reference time of satellite ephemeris information and common TA parameter;
- Validity duration for UL sync information; Term of validity of SIB information;
- t-Service (the timing information on when the serving cell is going to stop serving the area); Residual period of cell;
- Cell reference location; Reference location for cell selection or handover;
- Cell specific K_offset; Offset for scheduling; and
- K_mac; Information on difference between downlink transmission reference point and uplink reception synchronization reference point.

Here, the epoch time is, for example, a reference time of the satellite ephemeris and common TA parameter. The satellite ephemeris and common TA parameter are generated based on the epoch time, and values thereof at the time of the epoch time are indicated. The terminal may, for example, calculate a satellite location based on the epoch time and the satellite ephemeris information, and calculate the delay time of the feeder link based on the epoch time and the common TA parameter.

Further, for example, the epoch time of the satellite ephemeris for the serving cell and the common TA parameter is expressed by a system frame number (SFN) and a subframe number, not by an absolute time, and may be indicated to the terminal.

In the terminal, for example, the time at which the subframe with the SFN and the subframe number indicated starts (subframe start time) is interpreted as the epoch time. Here, since there is a propagation delay between the base station and the terminal, for example, it is expected to clarify a Reference Point (RP), at which time point the subframe start time indicated by the epoch time is in the course of propagation of the signal from the base station to the terminal. For example, the reference point for the epoch time may be a point at which an uplink signal is synchronized (uplink synchronization reference point). For example, the epoch time may be the subframe start time for the point at which the uplink signal is synchronized.

Note that, the point at which the uplink signal is synchronized (uplink synchronization reference point) may be, for example, a point at which signals transmitted from terminals in the cell to the base station are synchronized. For example, the point at which the uplink signal is synchronized may be a transmission end of the base station, may be a transmission end of the satellite, or may be set to any point between the satellite and the base station.

The terminal, for example, may calculate the satellite location and the common TA value for the transmission timing of the terminal, considering a propagation delay amount between the reference point and the terminal, and may transmit data.

Incidentally, the satellite ephemeris information may include, for example, the following parameters:

- Position and velocity state vector ephemeris format; and

  - Position (m)
  - Velocity (m/s)

- Orbital parameter ephemeris format

  - Semi-major axis $\alpha$ (m)
  - Eccentricity e
  - Argument of periapsis $\omega$ (rad)
  - Longitude of ascending node ($\Omega$ rad)
  - Inclination i (rad)
  - Mean anomaly M (rad) at epoch time.

Meanwhile, the common TA parameter may include, for example, the following parameters:

- TACommon: Common TA value at the time of epoch time;
- TACommonDrift: Amount of variation in common TA value; and
- TACommonDrift Variation: Amount of variation in common TA value variation.

The satellite ephemeris information and common TA parameter are sometimes referred to as assistance information.

The terminal, for example, using at least one of the above parameters included in the control information for NTN, may calculate the amount of feeder-link delay (hereinafter referred to as "feeder-link delay amount") (round-trip delay), Delay$_{common}$ (t), according to following Expression 1:

[1]

$$Delay_{common}(t) = D_{common}(t_{epoch}) + DCommonDrift \times (t - t_{epoch}) + DCommonDriftVariation \times (t - t_{epoch})^2 \quad \text{(Expression 1)}.$$

In the Expression, $D_{Common} = \frac{TA_{Common}}{2}$ , $DCommonDrift = \frac{TACommonDrift}{2}$ ,

$DCommonDriftVariation = \frac{TACommonDriftVariation}{2}$

$t_{epoch}$: epoch time

Note that, the feeder link delay amount may be a delay between the satellite and the point at which the uplink signal is synchronized (reference point).

(Indication of Neighbor Cell Information)

In NR, a terminal in an RRC_IDLE state or an RRC_INACTIVE state performs neighbor cell measurement for cell reselection.

The information on a neighbor cell used in the neighbor cell measurement may be indicated (e.g., broadcast) from a base station to the terminal, for example. For example, the information on the neighbor cell may be broadcast to the terminal by SIB type 2 (SIB 2). The information on the neighbor cell may include, for example, at least one of a radio parameter such as carrier frequency or subcarrier spacing (SCS) and information on a time location of an SSB to be measured, which is called SSB measurement timing configuration (SMTC). Incidentally, the SSB is an abbreviation for Synchronization Signal (SS) /Physical Broadcast Channel (PBCH) block. In the neighbor cell measurement, quality measurement may be performed on, for example, Reference Signal Received Power (RSRP), Reference Signal Received Quality (RSRQ), and Signal to Interference and Noise Ratio (SINR) of the neighbor cell.

Further, in NR, for example, a terminal in an RRC_CONNECTED state performs the neighbor cell measurement for handover in accordance with the indication from the base station and then performs the handover.

Information on a neighbor cell used in the neighbor cell measurement for the handover (e.g., which may be same as above-mentioned information on neighbor cell) may be indicated to the terminal by UE-specific RRC signaling (e.g., dedicated RRC signaling), for example. For example, the information on the neighbor cell may be indicated by an "RRCreconfiguration message" from a base station (e.g., serving cell) to which the terminal is connected.

In NTN, as the information on the neighbor cell, satellite ephemeris information and common TA parameter of the neighbor cell may be indicated. The satellite ephemeris information and common TA parameter of the neighbor cell may be used, for example, by a terminal to adjust a measurement window as a satellite moves. Further, when performing the handover, the terminal may perform timing adjustment (TA) for random access transmission (e.g., random access channel (RACH) transmission), using the satellite ephemeris information and common TA parameter of the neighbor cell.

For example, there is room for further study on a method for indicating information on a neighbor cell.

(Regarding Conditional Handover)

In NR (e.g., Release 16), conditional handover (CHO) has been introduced.

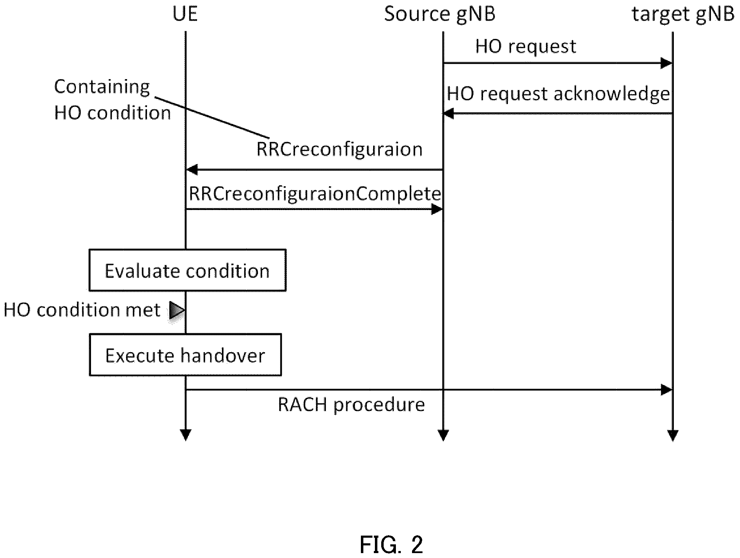

FIG. 2 is a sequence diagram illustrating an example of CHO.

In CHO, for example, a terminal receives in advance an RRCreconfiguration message including a condition for the handover (hereinafter referred to as "HO condition"). For example, a base station that serves as a handover source (e.g., also referred to as source base station, source gNB, or source cell) may transmit a handover request (HO request message) to a base station that serves as a handover target (e.g., also referred to as target base station, target gNB, or target cell). The target base station may transmit a handover request acknowledge (HO request acknowledge message) to the source base station. The source base station may then transmit the RRCreconfiguration message including the HO condition to a terminal (UE) subject to the handover, for example.

The terminal may evaluate (or confirm, determine, monitor) at any time whether the HO condition is satisfied. When the HO condition is satisfied, the terminal may perform the handover and perform processing of accessing a new cell (target base station) (e.g., RACH processing).

For example, in Release16, a condition based on the neighbor cell measurement is used as the HO condition. In the condition based on the neighbor cell measurement, a terminal may perform the handover in a case where, for example, measurement results of RSRP, RSRQ, SINR, and the like of the neighbor cell satisfy the prescribed criteria.

In NTN, as the HO condition, for example, the addition of at least one of a condition based on a timing and a condition based on a location has been discussed, in addition to the condition based on the neighbor cell measurement.

In the timing-based CHO, for example, a terminal may perform the handover within a time range indicated in advance. Alternatively, the terminal may, for example, perform the neighbor cell measurement within the time range indicated in advance and perform the handover when a result of the neighbor cell measurement satisfies the prescribed criteria.

In the location-based CHO, for example, a terminal may perform the handover in a case where a distance between a reference location of a cell to which the terminal is connected (e.g., current cell or serving cell) and the terminal is greater than a value indicated in advance. Alternatively, for example, the terminal may perform the handover in a case where the distance between the reference location of the current cell and the terminal is greater than a distance between a reference location of the neighbor cell and the terminal (or greater by prescribed distance).

Thus, in NTN, giving an HO condition to a terminal beforehand allows the handover with a reduced delay even when a cell is switched at high speed as in LEO.

The conditional handover (CHO) has been described, thus far.

As described above, the epoch time indicated from a base station to a terminal in NTN may be represented by the SFN and subframe number.

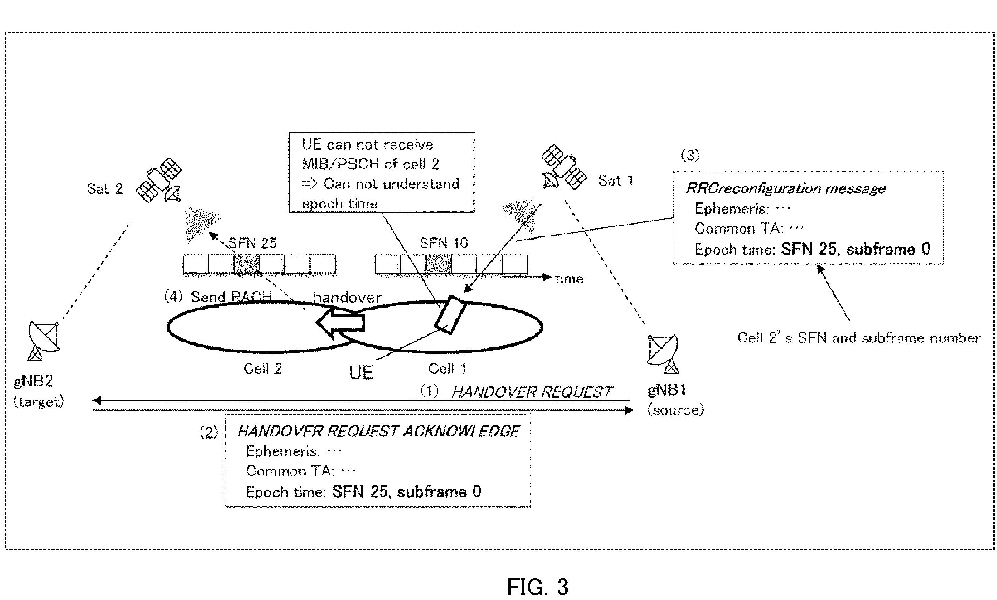

FIG. 3 illustrates an example of handover processing in NTN. In FIG. 3, for example, a UE receives, from gNB 1 that is a serving cell (or source cell), an RRCreconfiguration message including satellite ephemeris information, a common TA parameter, and information on epoch time of gNB 2 that is a target cell (or neighbor cell). When receiving the information on the epoch time, for example, the terminal calculates the epoch time based on a timing of the SFN and subframe corresponding to a received signal from gNB 1.

Here, the information on the epoch time received at the terminal along with the information on the satellite ephemeris and the common TA parameter of the neighbor cell (e.g., cell of gNB 2 in FIG. 3) may be a value that is based on the SFN and subframe number of the neighbor cell. Additionally, for example, as illustrated in FIG. 3, the epoch time in the current cell (e.g., cell of gNB 1) (e.g., SFN = 10, subframe 3) and the epoch time in the neighbor cell (e.g., cell of gNB 2) (e.g., SFN = 25, subframe 0) may be different from each other. For this reason, there is a possibility that UE cannot correctly interpret the epoch time corresponding to gNB 2 from information on the epoch time received from gNB 1. Further, for example, in a case where the UE has not identified (or shared) a reference point for the epoch time for the satellite ephemeris and the common TA parameter of the neighbor cell, the UE may not be able to calculate the epoch time accurately. For this reason, the accuracy of the estimation of the satellite location using satellite ephemeris and the estimation of the delay amount in the feeder link using the common TA parameter is likely to be reduced.

Note that the term "interpret" may be replaced with, for example, "specify," "judge," "determine," "decide," "calculate," or "understand."

In a non-limiting exemplary embodiment of the present disclosure, for example, a method by a terminal for identifying an epoch time and a reference point for the epoch time correctly and improving the accuracy of estimating by the terminal the satellite location using satellite ephemeris and the accuracy of estimating a delay amount of a feeder link using a common TA parameter will be described. For example, the terminal may acquire information for interpreting the epoch time of a neighbor cell, from a network side.

[Overview of Communication System]

A communication system according to an embodiment of the present disclosure includes base station 100 and terminal 200.

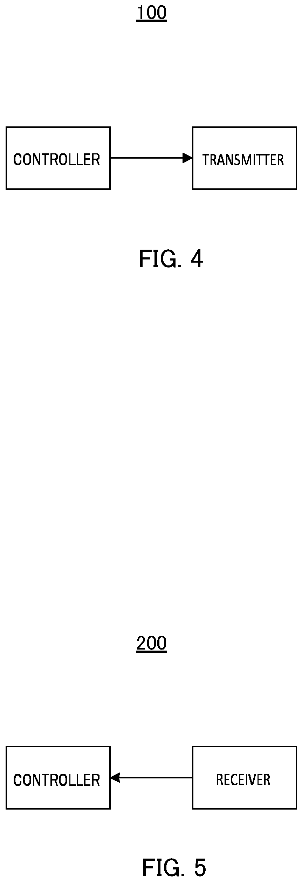

FIG. 4 is a block diagram illustrating an exemplary configuration of a part of base station 100. In base station 100 illustrated in FIG. 4, a controller (for example, corresponding to control circuitry) determines, in a first cell (for example, a serving cell), control information on a reference point for the reference time (for example, epoch time) in control on a transmission timing for an uplink signal to a second cell that is different from the first cell. A transmitter (for example, corresponding to transmission circuitry) transmits the control information.

FIG. 5 is a block diagram illustrating an exemplary configuration of a part of terminal 200. In terminal 200 illustrated in FIG. 5, a receiver (for example, corresponding to reception circuitry) receives, in the first cell (for example, the serving cell), the control information on the reference point for the reference time (for example, epoch time) in the control on the transmission timing for the uplink signal to the second cell that is different from the first cell. The controller (for example, corresponding to control circuitry) controls the transmission timing based on the control information.

[Configuration of Base Station]

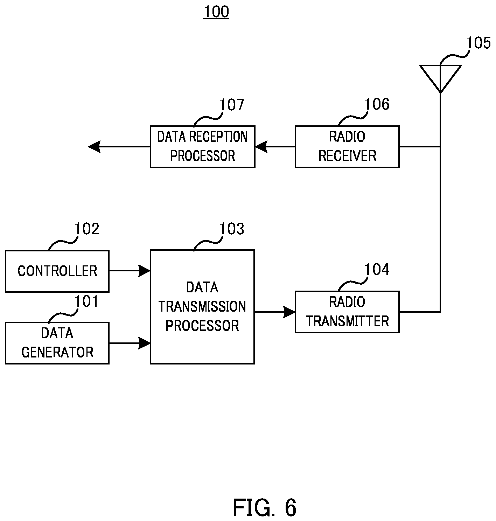

FIG. 6 is a block diagram illustrating a configuration example of base station 100 according to the present embodiment. Base station 100 includes, for example, data generator 101, controller 102, data-transmission processor 103, radio transmitter 104, antenna 105, radio receiver 106, and data-reception processor 107.

At least one of data generator 101, controller 102, data-transmission processor 103, and data-reception processor 107 illustrated in FIG. 6 may be included in the controller illustrated in FIG. 4, for example. Further, at least one of radio transmitter 104 and antenna 105 illustrated in FIG. 6 may be included in the transmitter illustrated in FIG. 4, for example.

Data generator 101, for example, generates a downlink signal to each terminal 200 and outputs the generated downlink signal to data-transmission processor 103. The downlink signal generated by data generator 101 may include at least any of the following signals: user data (e.g., Physical Downlink Shared Channel (PDSCH)); a control signal (e.g., Physical Downlink Control Channel (PDCCH)); a synchronization signal (e.g., SSB); a reference signal (RS); and Medium Access Control (MAC) control information.

Controller 102 may, for example, generate system information (e.g., broadcast information) such as a Master Information Block (MIB) or SIB and specific control information (e.g., RRC control information such as RRCreconfiguration message). Controller 102 outputs the generated information to data-transmission processor 103.

For example, basic control information including an SFN may be indicated to terminal 200 by the MIB. Moreover, for example, the SIB may include information (e.g., minimum required information) for accessing a cell (e.g., base station 100), neighbor cell information for neighbor cell measurement or cell selection, and other broadcast information. The system information (e.g., SIB) may further include control information for NTN including at least one of parameters corresponding to the cell, such as satellite ephemeris, a common TA parameter, epoch time, and a term of validity. Furthermore, the system information (e.g., SIB) may include, for example, information for a neighbor cell in NTN including at least one of parameters corresponding to the neighbor cell, such as satellite ephemeris, a common TA parameter, and epoch time. The information for the neighbor cell in NTN may include information corresponding to each of the other cells (e.g., neighbor cells)

Incidentally, a method for transmitting the information for the neighbor cell (e.g., including at least one of satellites ephemeris, common TA parameter, and epoch time) will be described later.

Further, controller 102 may, for example, perform exchange of cell information or SIB information (e.g., handover request or handover request acknowledge) with other base stations, for the handover or the like.

Data-transmission processor 103, for example, encodes and modulates the signal input from data generator 101 and the signal input from controller 102, and then outputs a modulated signal to radio transmitter 104.

Radio transmitter 104, for example, performs transmission processing such as D/A conversion, up-conversion, and/or amplification on the signal input from data-transmission processor 103, and transmits a radio signal after the transmission processing from antenna 105.

Radio receiver 106, for example, performs reception processing such as downconversion and/or A/D conversion on the data signal (e.g., Physical Uplink Shared Channel (PUSCH)), control signal (e.g., Physical Uplink Control Channel (PUCCH)), or random access signal (e.g., Physical Random Access Channel (PRACH)) from terminal 200 received via antenna 105, and outputs the signal after the reception processing to data-reception processor 107.

Data-reception processor 107, for example, performs channel estimation, demodulation processing, and decoding processing on the received signal input from radio receiver 106. Data-reception processor 107 outputs the decoded signal.

[Configuration of Terminal]

Next, a configuration example of terminal 200 will be described.

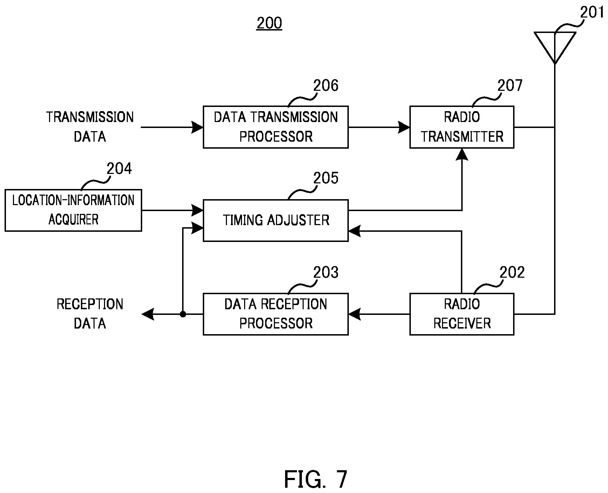

FIG. 7 is a block diagram illustrating a configuration example of terminal 200 according to the present embodiment. Terminal 200 includes, for example, antenna 201, radio receiver 202, data-reception processor 203, location-information acquirer 204, timing adjuster 205, data-transmission processor 206, and radio transmitter 207.

At least one of data-reception processor 203, location-information acquirer 204, timing adjuster 205, and data-transmission processor 206 illustrated in FIG. 7 may be included in the controller illustrated in FIG. 5, for example. Meanwhile, at least one of antenna 201 and radio receiver 202 illustrated in FIG. 7 may be included in the receiver illustrated in FIG. 5, for example.

Radio receiver 202, for example, performs reception processing such as downconversion and/or A/D conversion on a downlink signal such as a data signal (e.g., PDSCH) and a control signal (e.g., PDCCH) from base station 100 received via antenna 201, and then outputs the signal after the reception processing to data-reception processor 203 and outputs information on a reception timing to timing adjuster 205.

Data-reception processor 203, for example, performs demodulation processing and decoding processing on the received signal input from radio receiver 202 (e.g., PDCCH or PDSCH). The control signal (e.g., PDCCH) may include, for example, assignment information on the downlink data signal (e.g., PDSCH) or assignment information on the uplink data signal (e.g., PUSCH). Additionally, the downlink data signal (e.g., PDSCH) may include user data, for example. The downlink data signal (e.g., PDSCH) may further include broadcast information such as system information, RRC control information (e.g., RRCreconfiguration message), MAC Control Element (MAC CE) control information, a RACH response (may be referred to as, e.g., msg2 or Random Access Response (RAR)), or a TA command.

Further, data-reception processor 203 performs reception processing of information for NTN (e.g., including at least one of satellites ephemeris, common TA parameter, and epoch time) included in the broadcast information or the RRC control information (e.g., RRCreconfiguration message) and of information to be used in the cell selection, the neighbor cell measurement, or the handover, thus outputting the signal after the reception processing to timing adjuster 205.

Location-information acquirer 204, for example, acquires location information on terminal 200 (e.g., information on latitude, longitude, elevation, and the like). The location information on terminal 200 may be acquired by, for example, a GNSS function such as the Global Positioning System (GPS). Location-information acquirer 204 outputs the acquired location information on terminal 200 to timing adjuster 205.

Timing adjuster 205, for example, controls (adjusts) a transmission timing for a transmission signal (uplink signal). Timing adjuster 205 outputs information on the timing adjustment to radio transmitter 207.

For example, timing adjuster 205 may calculate a distance between terminal 200 and a satellite based on the location information on terminal 200 input from location-information acquirer 204 and the satellite ephemeris information input from data-reception processor 203. Timing adjuster 205 may then calculate propagation delay time between the satellite and terminal 200 (e.g., service link) based on the distance between terminal 200 and the satellite and a radio wave propagation speed (approximately $3 \times 10^8$ m/s).

For example, timing adjuster 205 may further calculate propagation delay time between base station 100 and the satellite (e.g., feeder link) based on the common TA parameter input from data-reception processor 203.

For example, timing adjuster 205 may use information on the epoch time in at least one of a case where the location of a satellite is estimated based on the satellite ephemeris information and a case where the feeder link delay amount is estimated based on the common TA parameter.

Furthermore, timing adjuster 205 may adjust the transmission timing for the uplink signal (e.g., uplink data or RACH signal) using the propagation delay time of each of the service link and feeder link, for example. For example, timing adjuster 205 may perform the timing adjustment such that a signal is received by base station 100 at a prescribed timing by compensating the propagation delay time of each of the service link and feeder link, in accordance with a timing adjustment value ($T_{TA}$) indicated in following Expression 2;

[2]

$$T_{TA} = \left(N_{TA} + N_{TAoffset}\right) \times T_c + T_{UEspecific} + T_{common} \qquad ... \text{(Expression 2)}.$$

In Equation 2, $N_{TA}$ denotes, for example, a TA value indicated by the TA command, $N_{TAoffset}$ denotes offset for the TA value, and $T_c$ denotes a basic time unit. Moreover, $T_{UEspecific}$ denotes an UE-specific TA value that is based on the service link delay time estimated from the location information on terminal 200 and the location of the satellite, and $T_{common}$ denotes a common TA value that is based on the feeder link delay time calculated from the common TA parameter. The first term of Equation 2 is, for example, similar to that in Rel. 15 NR specifications. In Equation 2, the UE-specific TA value ($T_{UEspecific}$) and the common TA value ($T_{common}$) are added to the value of the first term.

Timing adjuster 205, for example, may perform the timing adjustment in accordance with the timing adjustment value indicated in Equation 2, based on a reception timing of the signal (e.g., SSB signal) that is received from base station 100 and input by radio receiver 202.

Data-transmission processor 206, for example, performs error correction encoding and modulation processing on transmission data to be input, and then outputs the modulated signal to radio transmitter 207. The transmission data may be, for example, a signal (e.g., PUSCH) transmitted with time- and frequency-resources allocated by base station 100 or may be a signal (e.g., also referred to as PRACH signal or msg1) transmitted in the random access processing.

Radio transmitter 207, for example, performs transmission processing such as D/A conversion, up-conversion, and/or amplification on the signal input from data-transmission processor 206, and transmits a radio signal after the transmission processing from antenna 201. Radio transmitter 207 may, for example, transmit the signal at a timing specified by the information input from timing adjuster 205.

[Exemplary Operations of Base Station and Terminal]

In the following, exemplary operations of base station 100 and terminal 200 will be described.

In the present embodiment, for example, base station 100 generates information on epoch time of a neighbor cell (neighbor cell) by using a system frame number (SFN) and a subframe number in a cell (serving cell) of base station 100. For example, base station 100 may convert the SFN and subframe number of the epoch time of the neighbor cell to the SFN and subframe number of the cell of base station 100, regenerate information on the epoch time based on the converted SFN and subframe number, and thus indicate the resultant information to terminal 200 in the cell of base station 100.

Terminal 200 interprets the epoch time of the neighbor cell based on the SFN and subframe number of the connected cell (serving cell) or the cell for which the information on the epoch time has been received.

Further, the reference point for the epoch time for the neighbor cell may be set as a point at which uplink signals are synchronized in the neighbor cell (for example, an uplink synchronization reference point). Note that, the reference point for the epoch time in the neighbor cell may be, for example, defined in advance in a specification (for example, a standard). Alternatively, information on the reference point for the epoch time in the neighbor cell (for example, indicating a point at which uplink signals are synchronized in the neighbor cell) may be indicated to terminal 200.

In the following, a description will be given of a method for transmitting information for a neighbor cell transmitted from base station 100 (including, e.g., satellite ephemeris, common TA parameter, and epoch time) and a method for interpreting the epoch time at terminal 200. By way of example, two methods (Method 1 and Method 2) in the processing at the time of handover will be each described.

<Method 1>

In Method 1, base station 100 converts epoch time (e.g., SFN and subframe number) of a neighbor cell to a value that is based on an SFN and a subframe number in base station 100, for example. For example, control information on epoch time indictaed from base station 100 to terminal 200 indicates epoch time of base station 100 (e.g., serving cell of terminal 200) corresponding to the epoch time of the neighbor cell.

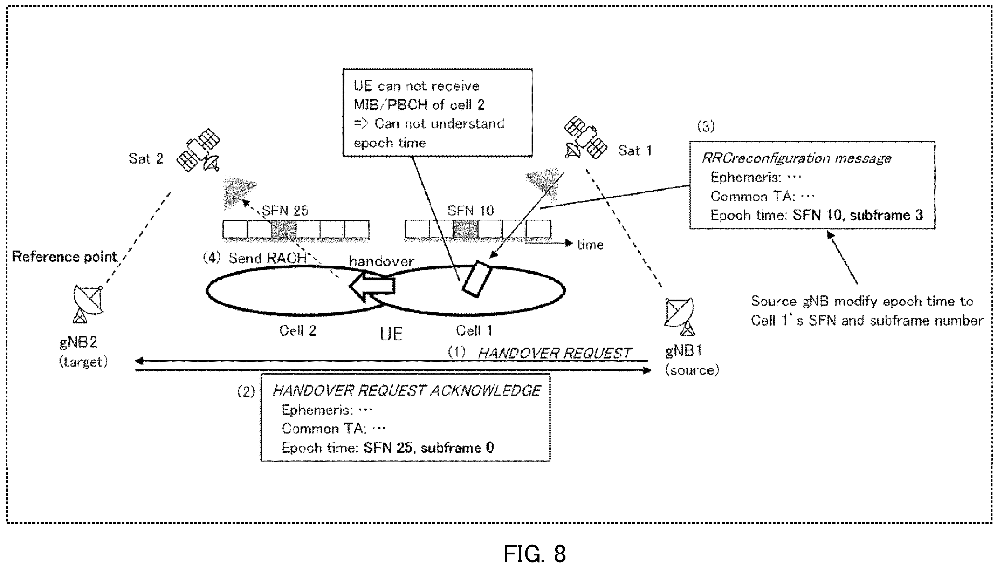

FIG. 8 illustrates exemplary operations for handover of base station 100 and terminal 200 in Method 1.

In the example illustrated in FIG. 8, gNB 1 (e.g., base station 100) communicates with a UE in cell 1 formed by satellite 1, and gNB 2 communicates with a UE in cell 2 formed by satellite 2. The UE illustrated in FIG. 8 (e.g., terminal 200) is connected to gNB 1.

For example, at the time of handover, gNB 1 which is a base station serving as a handover source (source base station) transmits a handover request (HANDOVER REQUEST) to gNB 2 which is a base station serving as a handover target (target base station) (Processing 1 illustrated in FIG. 8).

gNB 1, which is the source base station, receives a handover request acknowledge (HANDOVER REQUEST ACKNOWLEDGE) from gNB 2, which is a target base station (Processing 2 illustrated in FIG. 8).

The handover request acknowledge may include, for example, system information used to receive a signal from the target base station (or target cell) and to access the target base station.

The handover request acknowledge may further include, for example, satellite ephemeris information, a common TA parameter, and information on epoch time for satellite 2 forming the target cell (cell 2), as illustrated in FIG. 8. Here, the epoch time may be represented by an SFN and a subframe number. For example, in the handover request acknowledge, a value of the epoch time with reference to the SFN and subframe number that are based on a timing of the target cell (e.g., cell 2) may be indicated to the source base station (gNB 1). The reference point for the epoch time may be configured as a point (e.g., uplink synchronization reference point) where uplink signals in the target cell are synchronized.

In the example illustrated in FIG. 8, SFN 25 and subframe 0, which are based on the timing of the target cell (Cell 2), are indicated to the source base station (gNB 1) as the epoch time. Further, in the example illustrated in FIG. 8, the reference point for the epoch time of the target cell may be the transmission point of the target base station (gNB 2) or satellite 2 that forms the target cell (Cell 2).

The source base station (gNB 1) indicates, to the UE in cell 1, the control information such as the system information, the satellite ephemeris information, the common TA parameter, the epoch time, and a term of validity of the target cell acquired from the target base station (gNB 2) (Processing 3 illustrated in FIG. 8). These pieces of information may be indicated to the UE by, for example, an RRC message (RRCreconfiguration message) or an SIB.

Here, in Method 1, as for the epoch time, the source base station (gNB 1) converts (or overwrites) the SFN and subframe number that are based on the timing of the target cell (cell 2) to (with) an SFN and a subframe number that are based on a timing of the source cell (cell 1) of the source base station (gNB 1). In the example illustrated in FIG. 8, the source base station (gNB 1) converts SFN 25 and subframe 0 of the target cell that are indicated in the information on the epoch time to SFN 10 and subframe 3 of the source cell that has the same timing as SFN 25 and subframe 0 of the target cell. The source base station (gNB 1) may indicate, to the UE in cell 1, the information on the epoch time indicating SFN 10 and subframe 3 after conversion.

The information indicated from the source base station (gNB 1) to the UE may include, for example, information on a handover condition.

In FIG. 8, when the UE receives, by the RRC message or SIB, the above information from gNB 1 to which the UE is connected, for example, the UE determines (evaluates or monitors) whether the indicated handover condition is satisfied. For example, for the determination of the handover condition or for confirmation after the handover condition is satisfied, the UE may perform received quality measurement using the SSB of the target cell.

Further, in a case where a carrier frequency differs between the connected cell and the neighbor cell, for example, the UE may receive a signal from the target cell by opening a reception window at an arrival timing of an SSB signal from the target cell subject to the measurement. Alternatively, for example, the UE may stop reception of the signal from the target cell by closing the reception window at a timing that is different from the arrival timing of the SSB signal from the target cell subject to the measurement. At this time, the UE may estimate propagation delay by using the satellite ephemeris information and common TA parameter of the target cell and then adjust a timing of the reception window based on the estimated propagation delay.

Further, the UE may access (e.g., perform RACH transmission to) the target cell so as to perform the handover (e.g., Processing 4 illustrated in FIG. 8). At this time, the UE may estimate the propagation delay (service link delay and feeder link delay) using the satellite ephemeris information and common TA parameter of the target cell and then perform, based on the estimated propagation delay, transmission of RACH in uplink or the like (e.g., adjustment of transmission timing).

At this time, for example, the UE may interpret the epoch time of the target cell based on a timing of the SFN and subframe of the cell (source cell) to which the UE is connected. In the example illustrated in FIG. 8, the UE interprets the epoch time as SFN 10 and subframe 3 based on the timing of the SFN and subframe of gNB 1 that is the source cell. The UE may then calculate a satellite location from the satellite ephemeris information and calculate the feeder-link delay amount (e.g., common TA value) from the common TA parameter, based on the interpreted epoch time.

Further, in FIG. 8, the reference point for the epoch time in the target cell is a point where uplink signals in the target cell are synchronized (uplink synchronization reference point). The UE may, for example, estimate the epoch time in real time based on a reception timing of a signal from the target cell and the estimated propagation delay amount between the UE and the reference point.

Thus, in Method 1, base station 100 converts the epoch time of the neighbor cell, based on the SFN and subframe used in base station 100, and then indicates the converted epoch time to terminal 200. This allows, in Method 1, terminal 200 to correctly identify the timing of the epoch time of the neighbor cell even when a signal from the neighbor cell (e.g., signal including SFN of neighbor cell, such as MIB and PBCH) cannot be received.

In Method 1, a case has been described where the epoch time of the neighbor cell is converted based on the SFN and subframe used in base station 100, but the present disclosure is not limited to this case. For example, base station 100 may indicate, to terminal 200, the epoch time of the neighbor cell generated based on the SFN and subframe used in base station 100. Alternatively, base station 100 may indicate, to terminal 200, the epoch time of the neighbor cell generated at an external apparatus (e.g., core network, other apparatuses, or the like) based on the SFN and subframe used in base station 100. At this time, for the satellite ephemeris and the common TA parameter as well, information or a parameter according to the epoch time based on the SFN and subframe used in base station 100 may be generated.

<Method 2>

In Method 2, base station 100 indicates, to terminal 200, a value of a difference between an SFN and a subframe number corresponding to epoch time in base station 100 and an SFN and a subframe number corresponding to epoch time in a neighbor cell, in addition to the epoch time of the neighbor cell (e.g., SFN and subframe number). For example, control information on epoch time indicated from base station 100 to terminal 200 indicates a difference between the epoch time of the neighbor cell and the epoch time of base station 100 (e.g., serving cell of terminal 200).

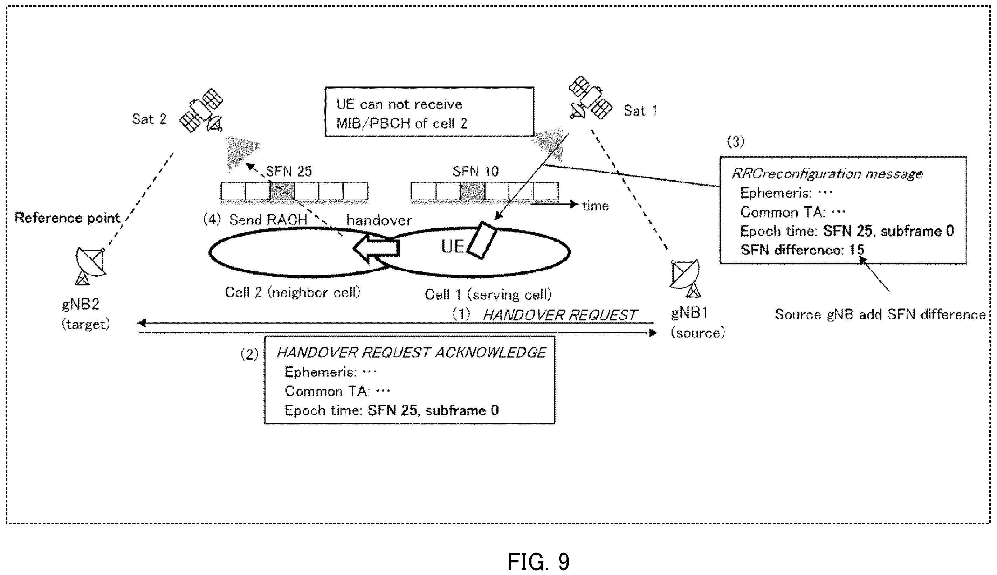

FIG. 9 illustrates exemplary operations for handover of base station 100 and terminal 200 in Method 2.

In the example illustrated in FIG. 9, gNB 1 (e.g., base station 100) communicates with a UE in cell 1 formed by satellite 1, and gNB 2 communicates with a UE in cell 2 formed by satellite 2. The UE illustrated in FIG. 9 (e.g., terminal 200) is connected to gNB 1.

Incidentally, Processing 1 illustrated in FIG. 9 (operation related to handover request) and Processing 2 (operation related to handover request acknowledge) may be the same as in Method 1 (FIG. 8). Further, the reference point for the epoch time of the target cell may be set to a point at which uplink signals in the target cell are synchronized (for example, an uplink synchronization reference point) in the same manner as in Method 1.

As in Method 1, the source base station (gNB 1) indicates, to the UE (terminal 200) in cell 1, the control information such as the system information, the satellite ephemeris information, the common TA parameter, the epoch time, and a term of validity of the target cell acquired from the target base station (gNB 2) (Processing 3 illustrated in FIG. 9). These pieces of information may be indicated to the UE by, for example, an RRC message (RRCreconfiguration message) or an SIB.

Here, in Method 2, the source base station (gNB 1) may determine information on a difference (or variation) in the SFN (referred to as, e.g., "SFN difference") between the target cell (cell 2) and the source cell (cell 1), as for the epoch time. The source base station may acquire the information on the SFN difference by exchanging information with the target base station, for example. In the example illustrated in FIG. 9, the source base station (gNB 1) may generate an SFN difference indicating 15, which is the difference between SFN 25 of the target cell and SFN 10 of the source cell at the same timing. The source base station (gNB 1) may indicate the generated SFN difference to the UE in cell 1.

In FIG. 9, when the UE receives, by the RRC message or SIB, the above information from gNB 1 to which the UE is connected, for example, the UE determines (evaluates or monitors) whether the indicated handover condition is satisfied. For example, for the determination of the handover condition or for confirmation after the handover condition is satisfied, the UE may perform received quality measurement using the SSB of the target cell.

Further, the UE may access (e.g., perform RACH transmission to) the target cell so as to perform the handover (e.g., Processing 4 illustrated in FIG. 9). At this time, the UE may estimate the propagation delay (service link delay and feeder link delay) using the satellite ephemeris information and common TA parameter of the target cell and then perform, based on the estimated propagation delay, transmission of RACH in uplink or the like (e.g., adjustment of transmission timing).

For example, the UE may interpret, as the epoch time of the neighbor cell (e.g., target cell), the time obtained by subtracting (or adding) the SFN difference from the epoch time indicated from the source base station (gNB 1), based on a timing of the SFN and subframe used in gNB 1 (source cell) to which the UE is connected. In the example illustrated in FIG. 9, the UE may interpret, in the source cell, the timing of SFN 10 obtained by subtracting SFN difference 15 from SFN 25 indicated in the epoch time indicated by gNB 1, as the timing of SFN 25 in the neighbor cell. Terminal 200 may then calculate a satellite location from the satellite ephemeris information and calculate the feeder-link delay amount (e.g., common TA value) from the common TA parameter, based on the interpreted epoch time.

Further, in FIG. 9, since the reference point for the epoch time in the target cell is a point at which the uplink signals in the target cell are synchronized (uplink synchronization reference point), the UE may estimate the epoch time in real time based on a reception timing of a signal from the target cell and the estimated propagation delay amount between the UE and the reference point.

The UE may use the calculated information to perform timing adjustment of the reception window for the quality measurement of the target cell or timing adjustment when accessing the target cell during execution of the handover.

Thus, in Method 2, base station 100 indicates, to terminal 200, a difference in SFN between the neighbor cell and the cell of base station 100 as well as the epoch time of the neighbor cell. This allows, in Method 2, terminal 200 to identify (derive) the timing of the SFN of the neighbor cell and thus correctly identify the epoch time of the neighbor cell even when a signal from the neighbor cell (e.g., signal including SFN of neighbor cell, such as MIB and PBCH) cannot be received.

Note that the information on the SFN difference may be separately indicated to terminal 200 by the SIB or RRC control information, without limitation to the indication at the time of the handover.

Further, in the example of FIG. 9, a case has been described where base station 100 indicates the information on the SFN difference to terminal 200, but information on a difference in subframe number between the source cell and the target cell may be indicated to terminal 200, in addition to the SFN difference.

Method 1 and Method 2 have been each described, thus far.

For example, information on an SFN is indicated to terminal 200 by at least one of an MIB and PBCH (sometimes referred to as "MIB/PBCH") broadcast in each cell. By way of example, when terminal 200 is located in the vicinity of the neighbor cell (e.g., target cell), a received quality (e.g., Signal to Noise Ratio (SNR)) of a signal from the neighbor cell is high; hence, terminal 200 is highly likely to receive the MIB/PBCH of the neighbor cell and thus obtain the SFN of the neighbor cell. On the other hand, when terminal 200 is located away from the neighbor cell, the SNR of the signal from the neighbor cell is poor; hence, terminal 200 may not receive the MIB/PBCH and not acquire the SFN of the neighbor cell. For example, in the case of a conditional handover, terminal 200 receives information on the neighbor cell (e.g., including epoch time of neighbor cell) from base station 100 prior to an actual timing of the handover. For this reason, at a timing before the actual timing of the handover, terminal 200 is highly likely to be located away from the neighbor cell and is less likely to receive the MIB/PBCH of the neighbor cell (e.g., information on SFN of neighbor cell).

In the present embodiment, for example, in a cell to which terminal 200 is connected, terminal 200 receives control information for identifying epoch time (e.g., reference time) in control on a transmission timing (e.g., including determination of satellite location or calculation of delay time of feeder link) of an uplink signal to a neighbor cell (e.g., RACH), and controls the transmission timing based on the received control information.

For example, terminal 200 can correctly interpret, based on a timing of an SFN and a subframe in a serving cell, the epoch time of the neighbor cell included in the control information (e.g., RRCReconfiguration message or SIB) received from base station 100 that is the serving cell. This allows, for example, terminal 200 to improve the accuracy of estimation of the satellite location and the feeder-link delay amount in the neighbor cell without receiving the information on the SFN and/or subframe of the neighbor cell by the MIB/PBCH or SIB of the neighbor cell.

Further, for example, terminal 200 can correctly interpret the epoch time of the neighbor cell even in a case where the MIB/PBCH or SIB of the neighbor cell is not received, such as a case where the terminal is located away from the neighbor cell, thereby correctly determining a term of validity of the indicated information on the neighbor cell.

Further, in the present embodiment, as illustrated in FIGS. 8 and 9, the information for a neighbor (or target) cell (including, for example, satellite ephemeris, a common TA parameter, and an epoch time) is information generated in a neighbor (or target) base station. In this case, the reference point for the epoch time may be set to a point at which uplink signals in the neighbor cell are synchronized. Thus, base station 100 can easily generate information on the satellite ephemeris and the common TA parameter for the neighbor cell based on the reference point for the epoch time. Further, for example, by identifying the reference point for the epoch time, terminal 200 can estimate the epoch time in real time to appropriately calculate the TA value of the transmission timing for an uplink signal based on the reception timing of a signal from the neighbor cell and the estimated propagation delay amount between terminal 200 and the reference point, when accessing the neighbor (target) cell.

Therefore, according to the present embodiment, it is possible to improve the accuracy of transmission timing control of an uplink signal.

Incidentally, in a case where the handover is not triggered within the term of validity from the epoch time interpreted with the above-mentioned methods, terminal 200 may determine that the handover has failed and indicate the failure to base station 100. Additionally, after determining that the handover has failed, terminal 200 may receive again an RRCReconfiguration message or SIB updated with a new parameter from base station 100.

(Embodiment 2)

Configurations of base station 100 and terminal 200 according to the present embodiment may be the same as in Embodiment 1, for example.

In the present embodiment, for example, base station 100 need not indicate, in a cell of base station 100, satellite ephemeris information, a common TA parameter, and information on epoch time of a target cell to terminal 200 that performs a conditional handover.

For example, base station 100 (e.g., controller 102) may indicate, to terminal 200 that performs a normal handover, the satellite ephemeris information, the common TA parameter, and the information on the epoch time of the target cell by an RRCreconfiguration message at the time of the handover. On the other hand, base station 100 need not indicate, to terminal 200 that performs the conditional handover, the satellite ephemeris information, the common TA parameter, and the information on the epoch time of the target cell. In this case, base station 100 need not acquire these pieces of information from a target base station.

Moreover, in the present embodiment, for example, terminal 200 may receive the satellite ephemeris information, the common TA parameter, and the information on the epoch time of the target cell, from the target cell without reception from a cell to which terminal 200 is connected (e.g., source cell or serving cell).

For example, when performing the conditional handover, terminal 200 (e.g., data-reception processor 203) may receive information on NTN (e.g., SIB) from the target cell and thereby acquire the satellite ephemeris information, the common TA parameter, and the information on the epoch time of the target cell, prior to accessing the target cell (e.g., performing RACH transmission). When performing the conditional handover, terminal 200 need not receive the information on the NTN of the target cell (e.g., information on epoch time) from the cell to which terminal 200 is connected (e.g., serving cell or source cell).

For example, terminal 200 accesses the target cell (e.g., performs RACH transmission) after acquiring the satellite ephemeris information, the common TA parameter, and the information on the epoch time of the target cell included in the SIB. At this time, terminal 200 may, for example, set the reference point for the epoch time in the target cell (for example, the neighbor cell) to an uplink synchronization point in the target cell. Note that, the reference point for the epoch time in the target cell may be, for example, defined in advance in a specification (for example, a standard). Alternatively, the information on the reference point for the epoch time in the target cell (for example, indicating a point at which uplink signals are synchronized in the target cell) may be indicated to terminal 200.

Further, when performing no conditional handover, for example, terminal 200 need not receive the information on the NTN from the target cell.

Terminal 200 may receive the information on the NTN of the target cell prior to the RACH processing on the target cell in the handover from the source cell to the target cell. For example, terminal 200 may receive the SIB for the NTN of the target cell during a period from satisfying a handover condition and triggering the handover to performing RACH transmission.

Further, when accessing the target cell (e.g., performing RACH transmission), for example, terminal 200 (e.g., timing adjuster 205) may perform timing adjustment according to Equation 2 after acquiring the satellite ephemeris information, the common TA parameter, and the information on the epoch time included in the information (e.g., SIB) on the NTN received from the target cell.

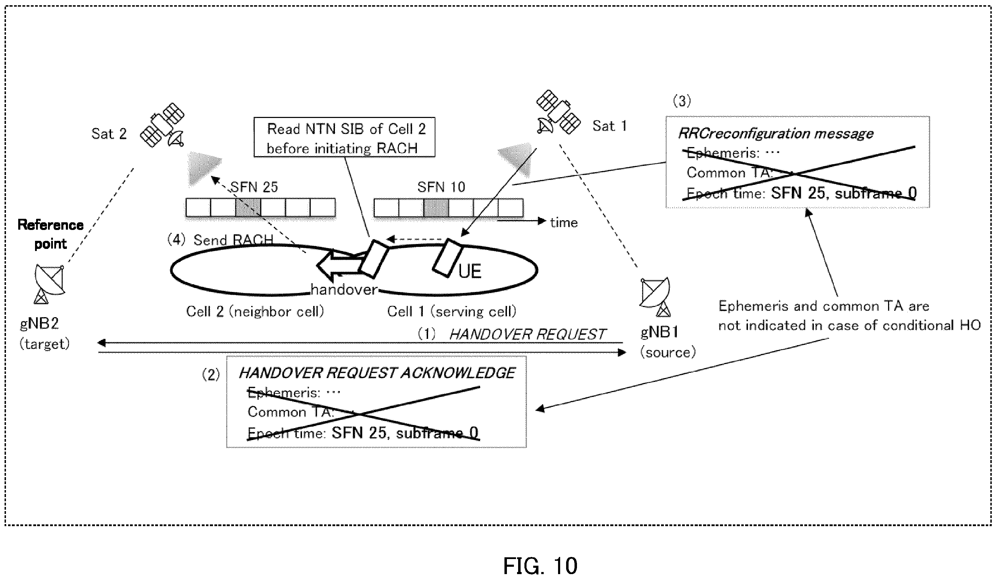

FIG. 10 illustrates exemplary operations for handover of base station 100 and terminal 200 in the present embodiment.

In the example illustrated in FIG. 10, gNB 1 (e.g., base station 100) communicates with a UE in cell 1 formed by satellite 1, and gNB 2 communicates with a UE in cell 2 formed by satellite 2.

The UE (e.g., terminal 200) illustrated in FIG. 10 is connected to gNB 1. Further, in FIG. 10, the UE performs the conditional handover. As illustrated in FIG. 10, the UE moves, in cell 1, from a location where an MIB/PBCH or SIB (e.g., SIB for NTN) of cell 2 cannot be received to a location where the MIB/PBCH or SIB of cell 2 can be received, for example.

For example, at the time of the conditional handover, gNB 1 which is a source base station transmits a handover request (HANDOVER REQUEST) to gNB 2 which is a target base station (Processing 1 illustrated in FIG. 10).

gNB 1, which is the source base station, receives a handover request acknowledge (HANDOVER REQUEST ACKNOWLEDGE) from gNB 2, which is a target base station (Processing 2 illustrated in FIG. 8).

The handover request acknowledge may include, for example, system information used to receive a signal from the target base station (or target cell) and to access the target base station.

Here, when the conditional handover is performed, the handover request acknowledge need not include, for example, satellite ephemeris information, a common TA parameter, and information on epoch time for satellite 2 forming the target cell (cell 2).

The source base station (gNB 1) indicates, to the UE (terminal 200) in cell 1, the system information on the target cell acquired from the target base station (gNB 2) (Processing 3 illustrated in FIG. 10). These pieces of information may be indicated to the UE by, for example, an RRC message (RRCreconfiguration message) or an SIB. In this manner, the UE that is located in cell 1 and performs the conditional handover does not acquire, from gNB 1, the satellite ephemeris information, the common TA parameter, nor the information on the epoch time of the target cell (cell 2).

In FIG. 10, when the UE receives, by the RRC message or SIB, the system information from gNB 1 to which the UE is connected, for example, the UE may determine (evaluate or monitor) whether the handover condition is satisfied, as in Embodiment 1.

When the handover condition is satisfied, the UE may access (e.g., perform RACH transmission to) the target cell so as to perform the handover (e.g., Processing 4 illustrated in FIG. 10). In this case, the UE may acquire the satellite ephemeris information, the common TA parameter, and the information on the epoch time of the target cell, by receiving the MIB or SIB for the NTN of the target cell prior to the RACH transmission, for example. For example, when the MIB (e.g., including SFN of target cell) or SIB for the NTN of the target cell cannot be received, terminal 200 does not acquire the satellite ephemeris information, the common TA parameter, nor the information on the epoch time of the target cell.

The UE may then estimate the propagation delay (service link delay and feeder link delay) using the satellite ephemeris information and common TA parameter of the target cell and then perform, based on the estimated propagation delay, transmission of RACH in uplink or the like (e.g., adjustment of transmission timing).

At this time, the UE may interpret the epoch time of the target cell based on a timing of the SFN and subframe of the target cell. In the example illustrated in FIG. 10, the UE interprets the epoch time of the target cell as SFN 25 and subframe 0 based on a timing of an SFN and a subframe of gNB 2 that is the target cell. The UE may then calculate a satellite location from the satellite ephemeris information and calculate the feeder-link delay amount (e.g., common TA value) from the common TA parameter, based on the interpreted epoch time.

Further, in FIG. 10, the reference point for the epoch time in the target cell is a point at which the uplink signals of the target cell are synchronized (uplink synchronization reference point). The UE may, for example, estimate the epoch time in real time based on the reception timing of a signal from the target cell and the estimated propagation delay amount between the UE and the reference point.

Thus, in the present embodiment, for example, in a cell to which terminal 200 is connected, terminal 200 receives, from a neighbor cell, control information for identifying epoch time (e.g., reference time) in control on a transmission timing (e.g., including determination of satellite location or calculation of delay time of feeder link) of an uplink signal to a neighbor cell (e.g., RACH), and controls the transmission timing based on the received control information.

Base station 100 (e.g., source base station) does not indicate the satellite ephemeris information, the common TA parameter, nor the information on the epoch time of the target cell, to terminal 200 that cannot receive the MIB information from the target cell for the conditional handover (e.g., cannot acquire SFN of target cell) and have a possibility of not correctly interrupting the epoch time of the target cell. This can reduce the amount of indication information, e.g., control overhead.

In addition, when approaching the target cell, terminal 200 acquires the satellite ephemeris information, the common TA parameter, and the information on the epoch time that are included in the SIB of the target cell. In this situation, for example, terminal 200 can acquire the SFN of the target cell from the MIB information on the target cell, thus interpreting the epoch time correctly.

Further, in the present embodiment, the information for a neighbor (or target) cell (including, for example, satellite ephemeris, a common TA parameter, and an epoch time) is information generated in a neighbor (or target) base station. In this case, the reference point for the epoch time may be set to a point at which uplink signals in the target cell (for example, the neighbor cell) are synchronized. For example, by identifying the reference point for the epoch time, terminal 200 can estimating the epoch time in real time to appropriately calculate the TA value of the transmission timing for an uplink signal based on the reception timing of a signal from the target cell and the estimated propagation delay amount between terminal 200 and the reference point, when accessing the target cell.

Alternatively, terminal 200 may acquire the satellite ephemeris information, the common TA parameter, and the information on the epoch time of the target cell prior to accessing the target cell. For this reason, terminal 200 is likely to have sufficient time to access the target cell after receiving the indication for the conditional handover, and can estimate a timing of the handover execution, from the handover condition; thus, terminal 200 can receive the SIB of the target cell with time to spare.

Therefore, according to the present embodiment, it is possible to improve the accuracy of transmission timing control of an uplink signal.

(Embodiment 3)

Configurations of base station 100 and terminal 200 according to the present embodiment may be the same as in Embodiment 1, for example.

In the present embodiment, for example, base station 100 may indicate, to terminal 200, information on epoch time based on an SFN and a subframe number of a target cell acquired from the target cell as is.

For example, base station 100 (e.g., controller 102) may indicate, to terminal 200 that performs a normal handover or a conditional handover, the satellite ephemeris information, the common TA parameter, and the information on the epoch time of the target cell by an RRCreconfiguration message at the time of the handover. Herein, the epoch time may be epoch time that is based on an SFN and a subframe number of a target cell.

Further, for example, the reference point for the epoch time may be set to the uplink synchronization point in the target cell. Note that, the reference point for the epoch time in the target cell may be, for example, defined in advance in a specification (for example, a standard). Alternatively, the information on the reference point for the epoch time in the target cell (for example, indicating a point at which uplink signals are synchronized in the target cell) may be indicated to terminal 200.

Additionally, in the present embodiment, for example, terminal 200 (e.g., data-reception processor 203) receives an RRCReconfiguration message from base station 100 (e.g., serving cell or source cell) and thus acquires the satellite ephemeris information, the common TA parameter, and the information on the epoch time of the target cell.

Further, terminal 200 may acquire, for example, information on an SFN of the target cell from the target cell (e.g., neighbor cell). The information on the SFN of the target cell may be indicated by an MIB/PBCH from the target cell, for example. In one example, terminal 200 may acquire the SFN of the target cell when being located close to the target cell (e.g., when SNR of signal from target cell is enough).

Further, for example, terminal 200 may interpret the epoch time at the time of acquiring the SFN of the target cell and then identify a satellite location and calculate the amount of propagation delay (e.g., TA value) from the satellite ephemeris information and the common TA parameter that are indicated from the source cell.

Further, for example, when performing RACH transmission on the target cell, terminal 200 (e.g., timing adjuster 205) may perform timing adjustment according to Equation 2, based on the satellite ephemeris information, the common TA parameter, and the information on the epoch time of the target cell.

At this time, since the reference point for the epoch time is a point at which the uplink signals in the target cell are synchronized, terminal 200 may estimate the epoch time in real time based on the reception timing of the signal from the target cell and the estimated propagation delay amount between terminal 200 and the reference point.

In this manner, terminal 200 receives control information on NTN of the target cell (e.g., including epoch time of target cell) from the cell to which terminal 200 is connected (e.g., source cell or serving cell), and receives, from the target cell, the information on the SFN of the target cell.

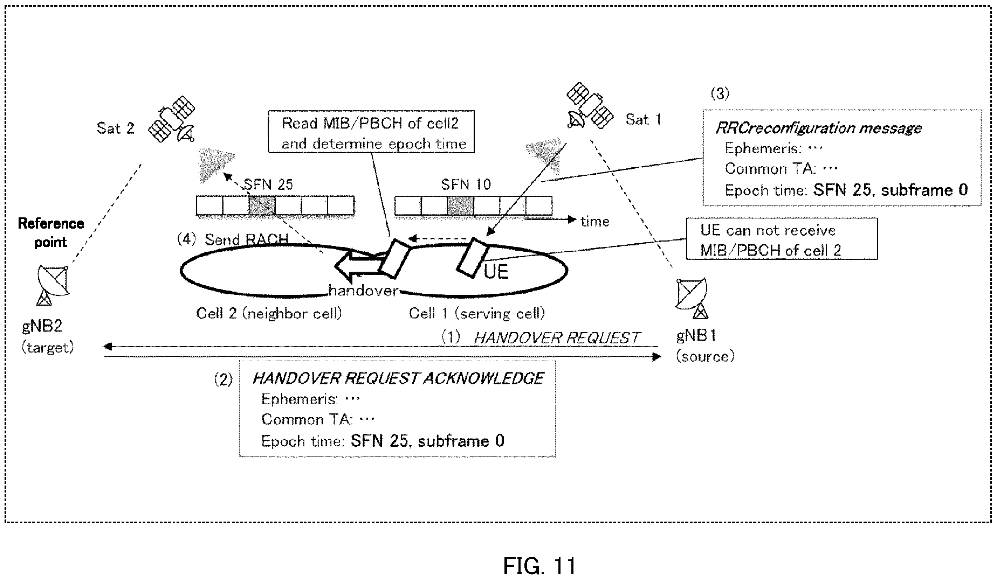

FIG. 11 illustrates exemplary operations for handover of base station 100 and terminal 200 in the present embodiment.

In the example illustrated in FIG. 11, gNB 1 (e.g., base station 100) communicates with a UE in cell 1 formed by satellite 1, and gNB 2 (e.g., base station 100) communicates with a UE in cell 2 formed by satellite 2.

The UE (e.g., terminal 200) illustrated in FIG. 11 is connected to gNB 1. As illustrated in FIG. 11, the UE moves, in cell 1, from a location where an MIB/PBCH or SIB (e.g., SIB for NTN) of cell 2 cannot be received to a location where the SIB/PBCH or SIB of cell 2 can be received, for example.

Note that, in FIG. 11, Processing 1 and Processing 2 may be the same as in Embodiment 1. Further, the reference point for the epoch time may be set to a point at which uplink signals of the target cell are synchronized (for example, an uplink synchronization reference point).

The source base station (gNB 1) indicates, to the UE in cell 1, the system information, the satellite ephemeris information, the common TA parameter, and the information on the epoch time of the target cell acquired from the target base station (gNB 2) (Processing 3 illustrated in FIG. 11). These pieces of information may be indicated to the UE by, for example, an RRC message (RRCreconfiguration message) or an SIB.

In FIG. 11, when the UE receives the RRC message or SIB from gNB 1 to which the UE is connected, for example, the UE may determine (evaluate or monitor) whether the handover condition is satisfied, as in Embodiment 1.

Here, the UE need not interpret the epoch time of the target cell received from the source cell (cell 1) when receiving no MIB/PBCH (e.g., including SFN of target cell) from the target cell (cell 2). For example, terminal 200 may interpret the epoch time of the target cell received from the source cell (cell 1) when approaching the target cell and receiving the MIB/PBCH (e.g., including SFN of target cell) from the target cell (Cell 2).

In the manner described above, the UE receives the satellite ephemeris information, the common TA parameter, and the information on the epoch time of the target cell from the source base station (or source cell), and receives the information on the SFN to interpret the epoch time from the target base station (or target cell).

The UE may then calculate a satellite location from the satellite ephemeris information and calculate the feeder-link delay amount (e.g., common TA value) from the common TA parameter, based on the interpreted epoch time.

For example, information on an SFN is indicated to terminal 200 by the MIB/PBCH broadcast in each cell. By way of example, when terminal 200 is located in the vicinity of the neighbor cell (e.g., target cell), a received quality (e.g., SNR) of a signal from the neighbor cell is high; hence, terminal 200 is highly likely to receive the MIB/PBCH of the neighbor cell and thus obtain the SFN of the neighbor cell. On the other hand, when terminal 200 is located away from the neighbor cell, the SNR of the signal from the neighbor cell is poor; hence, terminal 200 may not receive the MIB/PBCH and not acquire the SFN of the neighbor cell. For example, in the case of a conditional handover, terminal 200 receives information on the neighbor cell (e.g., including epoch time of neighbor cell) from base station 100 prior to an actual timing of the handover. For this reason, at a timing before the actual timing of the handover, terminal 200 is highly likely to be located away from the neighbor cell and is less likely to receive the MIB/PBCH of the neighbor cell (e.g., information on SFN of neighbor cell). In this situation, terminal 200 cannot correctly interpret information on epoch time based on the SFN of the target cell.

By contrast, in the present embodiment, terminal 200 receives, from a cell to which the terminal is currently connected (source cell), the satellite ephemeris information, the common TA parameter of the target cell, and the information on the epoch time that is based on the SFN of the target cell. Additionally, when being located close to the target cell, terminal 200 receives the MIB/PBCH of the target cell from the target cell and thereby acquires the information on the SFN. Thus, in the present embodiment, terminal 200 interprets the epoch time information indicated from the source cell after acquiring the information on the SFN of the target cell. This allows terminal 200 to correctly interpret (or derive) the epoch time that is based on the SFN of the target cell and thus appropriately estimate the satellite location information and the feeder-link delay time.

Further, in the present embodiment, the information for a neighbor (or target) cell (including, for example, satellite ephemeris, a common TA parameter, and an epoch time) is information generated in a neighbor (or target) base station. In this case, the reference point for the epoch time may be set to a point at which uplink signals in the neighbor cell are synchronized. For example, by identifying the reference point for the epoch time, terminal 200 can estimate the epoch time in real time to appropriately calculate the TA value of the transmission timing for an uplink signal based on the reception timing of a signal from the target cell and the estimated propagation delay amount between terminal 200 and the reference point, when accessing the target cell.

Alternatively, terminal 200 may acquire the satellite ephemeris information, the common TA parameter, and the information on the epoch time of the target cell prior to accessing the target cell. For this reason, terminal 200 is likely to have sufficient time to access the target cell after receiving the indication for the conditional handover, and can estimate a timing of the handover execution, from the handover condition; thus, terminal 200 can receive the MIB of the target cell with time to spare and perform the timing adjustment (e.g., calculation of TA value) for the RACH transmission.

Incidentally, base station 100 may indicate, to terminal 200, the satellite ephemeris information, the common TA parameter, and the information on the epoch time of the target cell, at a plurality of timings.

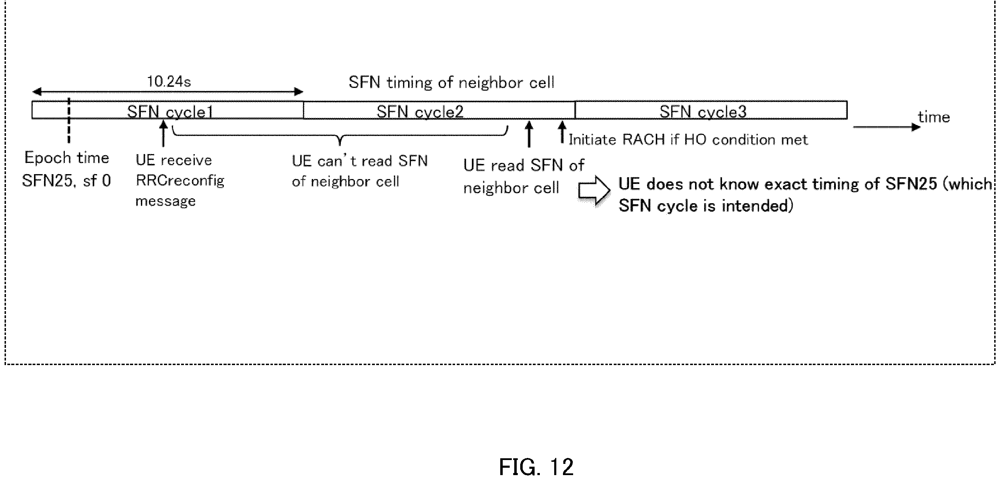

For example, in NR, information on an SFN is 10-bit information, taking values ranging from 0 to 1023. Hence, the SFN has one cycle (e.g., referred to as "SFN cycle") with 1024 frames and is reset to 0 every SFN cycle. For example, since one frame is 10 ms, the SFN is reset every 10.24 seconds. Accordingly, for example, at the time of receiving the MIB/PBCH of the neighbor cell (e.g., target cell) and acquiring (e.g., reading) the SFN of the neighbor cell, terminal 200 cannot possibly determine which SFN of the SFN cycle is referred to by the SFN and subframe number corresponding to the epoch time received in past, as illustrated in FIG. 12.

For example, in FIG. 12, terminal 200 acquires the epoch time of the target cell within a period of SFN cycle 1 and acquires the SFN of the target cell within a period of SFN cycle 2. In this situation, terminal 200 cannot determine whether the SFN and subframe number representing the epoch time of the target cell correspond to any of SFN cycle 2, SFN cycle 1, and an SFN cycle before SFN cycle 1.

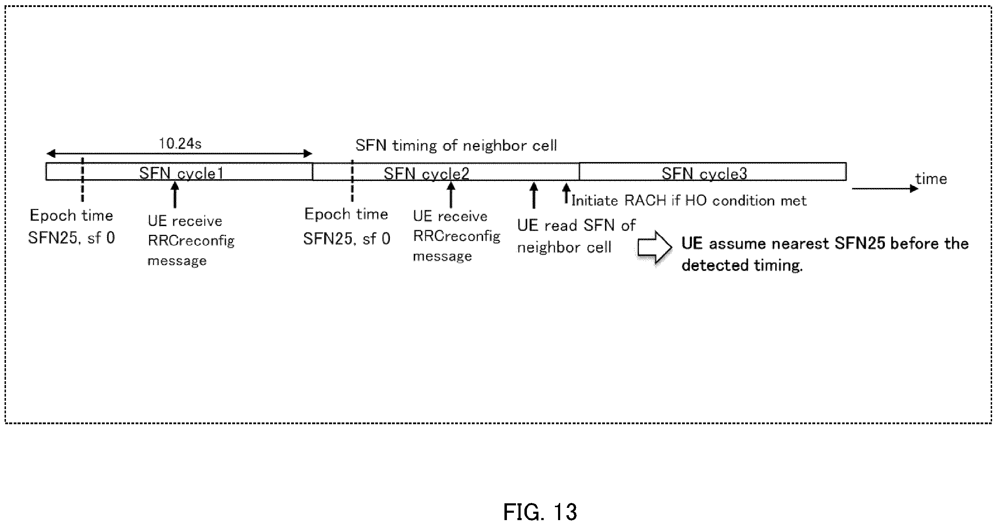

Consequently, for example, base station 100 may indicate, to terminal 200, the satellite ephemeris information, the common TA parameter, and the information on the epoch time of the target cell at least every one SFN cycle (e.g., 10.24 seconds), as illustrated in FIG. 13. The satellite ephemeris information, the common TA parameter, and the information on the epoch time of the target cell may be indicated to terminal 200 by, for example, the RRCreconfiguration message. Terminal 200, for example, may receive the satellite ephemeris information, the common TA parameter, and the information on the epoch time of the target cell at least every one SFN cycle.

Here, the satellite ephemeris information, the common TA parameter, and the information on the epoch time of the target cell may be updated with the epoch time represented by the most recent SFN, for example. By way of example, information based on the SFN of SFN cycle 1 is indicated as information indicated in SFN cycle 1, and information based on the SFN of SFN cycle 2 may be indicated as information indicated in SFN cycle 2.

For example, terminal 200 receives the satellite ephemeris information, the common TA parameter, and the information on the epoch time of the target cell by the RRCReconfiguration message, at a plurality of timings. In this case, terminal 200 may determine (or assume) the SFN indicated in the epoch time as an SFN of the same SFN cycle as the timing at which the RRCReconfiguration message has been received. Alternatively, terminal 200 may, for example, determine (or assume) the SFN indicated in the epoch time as the closest SFN from the timing at which the RRCReconfiguration message has been received.

This allows terminal 200 to uniquely identify the SFN indicated by the epoch time, at the time of receiving the MIB of the target cell and acquiring the SFN, thereby interpreting the epoch time correctly.

Incidentally, an example has been described in which the satellite ephemeris information, the common TA parameter, and the epoch time of the target cell are indicated to terminal 200 by the RRCReconfiguration message, but the present disclosure is not limited to this example, and they may be broadcast by an SIB. In this case, terminal 200 may receive the corresponding SIB every predetermined interval (e.g., interval of SFN cycles).

(Embodiment 4)

Configurations of base station 100 and terminal 200 according to the present embodiment may be, for example, the same as in Embodiment 1. The communication system according to the present embodiment may include NTN control apparatus (for example, also referred to as an NTN control center) 300 in addition to base station 100 and terminal 200.

NTN control apparatus 300 controls, for example, a plurality of base stations 100 and satellites. For example, NTN control apparatus 300 may generate at least one of the satellite ephemerides and common TA parameters corresponding respectively to the plurality of base stations 100 (or satellites).

NTN control apparatus 300 may, for example, indicate to each base station 100 at least one of the pieces of assistance information (for example, satellite ephemerides and the common TA parameters) to be indicated respectively from base station 100 to terminal 200. For example, base station 100 (for example, controller 102) receives pieces of assistance information on satellites to be used by base stations 100 (for example, including satellite ephemerides and common TA parameters) from NTN control apparatus 300. Further, base station 100 may indicate the received information to terminal 200. Note that, SIB or RRC control information may be used for the indication to terminal 200.

Here, the information to be transmitted from NTN control apparatus 300 to base station 100 and the information to be indicated from base station 100 to terminal 200 may include information on a cell (serving cell) configured by base station 100 and information on a neighbor cell (or a target cell) not configured by base station 100.

Further, base station 100 (for example, controller 102) may indicate to terminal 200 the information including the satellite ephemeris and the common TA parameter received from NTN control apparatus 300 as it is. In this case, a reference point for the epoch time may be set to a point (for example, the serving cell or the neighbor cell) set by NTN control apparatus 300.

Alternatively, base station 100 may, for example, estimate a satellite orbit, generate new information from the information including the satellite ephemeris and the common TA parameter received from NTN control apparatus 300 based on the estimated satellite orbit, and indicate the new information to terminal 200. In this case, the reference point for the epoch time may be set to the reference point of base station 100 that has generated the information, for example, the reference point of the serving cell for terminal 200.

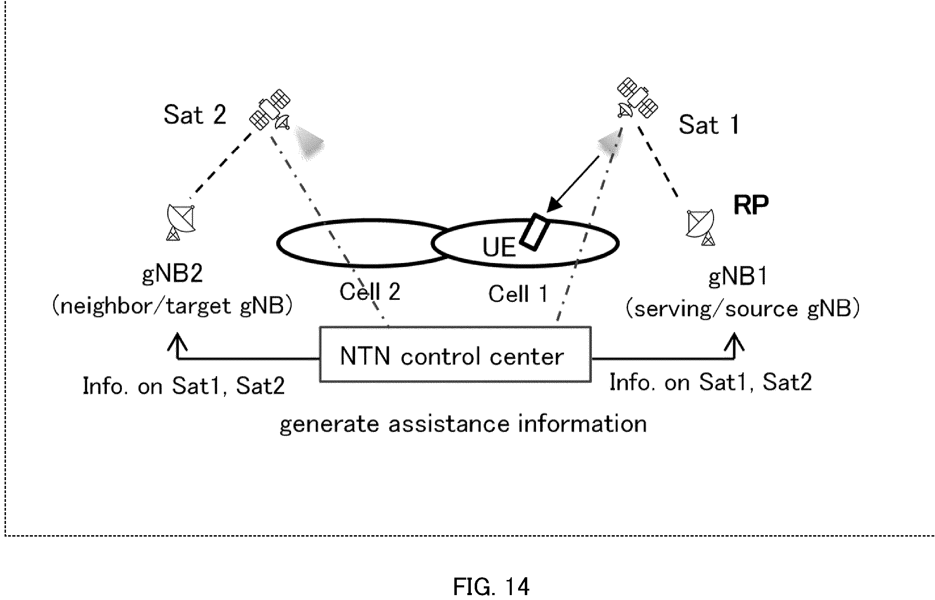

FIG. 14 is a diagram illustrating an operation example of base station 100 (gNB), terminal 200 (UE), and NTN control apparatus 300 (NTN control center) in the present embodiment.

In the example illustrated in FIG. 14, gNB 1 (for example, base station 100) communicates with a UE in Cell 1 formed by Satellite 1, and gNB 2 communicates with a UE in Cell 2 formed by Satellite 2. The UE (for example, terminal 200) illustrated in FIG. 14 is connected to gNB 1.

In FIG. 14, for example, NTN control apparatus 300 acquires information on the satellite location and the time from each satellite (for example, Satellite 1 and Satellite 2). The use of a control line different from a communication line for NTN, such as, for example, a telemetry line, is assumed for the communication used for acquiring information on the satellite location and the time.

NTN control apparatus 300 may, for example, generate information (for example, assistance information) on each satellite (for example, Satellite 1 and Satellite 2), such as satellite ephemeris information and a common TA parameter, based on the information on the satellite location and the time acquired from each satellite.

Then, NTN control apparatus 300, for example, indicate the generated information to each base station 100 (for example, gNB 1 and gNB 2). At this time, NTN control apparatus 300 may, for example, indicate to each base station 100 the information on a satellite (or base station) that forms the neighbor cell in addition to the information corresponding to base station 100. In the example illustrated in FIG. 14, both information on Satellite 1 and information on Satellite 2 are indicated to each of gNB 1 and gNB 2.

Each base station 100 indicates to terminal 200 (UE) the information on the satellites (for example, satellite ephemeris information and common TA parameters) received from NTN control apparatus 300. Further, each base station 100, for example, indicates to terminal 200 the information on the epoch time together with the information on the satellites. The information on the epoch time may, for example, include information on the SFN and subframe indicated as the epoch time and information on a reference point for the epoch time.

Hereinafter, a configuration method (for example, Method 1 and Method 2) for information on the epoch time will be described.

<Method 1>

In Method 1, base station 100 may, for example, indicate to terminal 200 the satellite ephemeris information and the information on the common TA parameter as they are that are generated in NTN control apparatus 300.

In this case, the information on the epoch time may be generated in, for example, NTN control apparatus 300. For example, NTN control apparatus 300 may configure the SFN and the subframe number to be indicated as the epoch time, and the reference point for the epoch time.

For example, on which cells (for example, the serving cell or the neighbor cell) the SFNs and the subframe numbers and the reference points are respectively based may be defined in advance in a specification (for example, a standard). Alternatively, information on a cell that serves as a reference for the SFN and the subframe number (for example, referred to as information on the SFN and the subframe number) may be indicated to base station 100, and information on a cell that serves as a reference of the reference point (for example, referred to as information on the reference point) may be indicated to base station 100.

For example, the information on the SFN and subframe may indicate on which of the cells (for example, the serving cell or the neighbor cell) the SFN and subframe number to be indicated as the epoch time are based. Further, for example, the information on the reference point may indicate which of the cells (for example, the serving cell or the neighbor cell) the uplink signal synchronization point indicated by the reference point for the epoch time is in. The information on the SFN and subframe number and the information on the reference point that are indicated as the epoch time may include a cell ID and may include a value indicating any cell of the serving cell and the neighbor cell, as a parameter indicating on which cell the information is based.

Base station 100 may, for example, indicate to terminal 200 the information on the SFN and subframe number and the information on the reference point, in addition to the satellite ephemeris, the common TA parameter, and the epoch time. Each of the information on the SFN and the subframe number and the information on the reference point may be indicated to terminal 200 individually or may be indicated to terminal 200 as common information.

For example, terminal 200 may identify, based on the information on the SFN and the subframe number indicated as the epoch time, the cell on which the SFN and the subframe number are based, and may identify, based on the information on the reference point, which cell the reference point is a point at which uplink signals are synchronized. Then, terminal 200 may, for example, interpret the epoch time based on the SFN, subframe number, and reference point identified and calculate the TA value at the time of uplink transmission.

As described above, in Method 1, the information indicating the cell on which each of the SFN and the subframe number to be indicated as the epoch time, and the reference point for the epoch time is based is indicated to terminal 200. Thus, terminal 200 can identify the SFN, the subframe number, and the reference point for the epoch time, and interpret the epoch time appropriately. As a result, terminal 200 can derive the satellite location information and the common TA value appropriately and calculate the TA value accurately at the time of uplink transmission.

<Method 2>

In Method 2, for example, base station 100 may newly generate (for example, update) at least one of satellite ephemeris information and a common TA parameter for a cell (for example, a serving cell) of base station 100 and a neighbor cell using the satellite ephemeris information and the information on the common TA parameter generated in NTN control apparatus 300, and may indicate the generated information to terminal 200.

For example, base station 100 may estimate satellite orbits for a satellite to which base station 100 is connected (or which base station 100 uses) and a satellite in a neighbor cell, and may newly generate at least one of the satellite ephemeris information and the common TA parameter information for the cell of base station 100 and the neighbor cell based on the estimated satellite orbits.

Thus, base station 100 can, for example, indicate to terminal 200 the satellite ephemeris information and the information on common TA parameters with higher accuracy based on the satellite orbits of the satellites that forms the cells.

At this time, the information on the epoch time may be generated in, for example, base station 100. For example, base station 100 may configure the epoch time (for example, SFN and subframe) based on the SFN and the subframe number of the cell formed by base station 100. Further, base station 100 may, for example, configure the reference point for the epoch time to a reference point corresponding to base station 100 (or cell formed by base station 100). In this case, the information on the SFN and the subframe number may indicate that the SFN and the subframe number to be indicated as the epoch time are based on the serving cell. Further, for example, the information on the reference point may indicate whether the reference point for the epoch time is the synchronization point of the uplink signal in the serving cell.

As described above, for example, in a case where information for a neighbor (or target) cell (including, for example, satellite ephemeris, a common TA parameter, and an epoch time) is generated in an apparatus different from a neighbor (or target) base station (for example, base station 100 or NTN control apparatus 300), the reference point for the epoch time may be set to a point at which uplink signals of the serving cell are synchronized.

When terminal 200 receives, for example, satellite ephemeris information, common TA parameter information, and information on epoch time, terminal 200 may identify that the information on SFN and subframe number to be indicated as the epoch time and the reference point for the epoch time are based on the serving cell, interpret the epoch time, and calculate the TA value at the time of uplink transmission.

Since the SFN and the subframe number to be indicated as the epoch time and the reference point for the epoch time are configured based on the serving cell, terminal 200 can interpret the epoch time appropriately and derive satellite location information and a common TA value of the serving cell and the neighbor cell appropriately in the serving cell. As a result, terminal 200 can calculate the TA value at the time of uplink transmission accurately.

Further, since terminal 200 can, for example, interpret the epoch time without receiving a signal of the neighbor cell, terminal 200 can derive the satellite location information and the common TA value in the neighbor cell even in an environment in which the neighbor cell signal cannot be received.

Note that, for example, NTN control apparatus 300 may generate the satellite ephemeris and indicate it to each base station 100, and each base station may generate a common TA parameter. Further, for example, the epoch time for satellite ephemeris information and the epoch time for the common TA parameter may be different from each other.

Methods 1 and 2 have been described above.

As described above, in the present embodiment, base station 100 determines, in the serving cell, control information on the reference point for the epoch time in transmission timing control of the uplink signal to the neighbor cell (or the target cell) (for example, information indicating in which cell the reference point is a point at which an uplink signal synchronizes), and transmits the control information to terminal 200. Terminal 200 receives, in the serving cell, the control information on the reference point for the epoch time in the neighbor cell (or target cell), and controls the transmission timing for the uplink signal to the neighbor cell based on the control information.

Thus, since terminal 200 can identify (or share) the reference point for the epoch time for the satellite ephemeris in the neighbor cell and the common TA parameter, terminal 200 can interpret the epoch time correctly and improve the accuracy of estimating the satellite location using the satellite ephemeris for the neighbor cell and estimating the delay amount in the feeder link using the common TA parameter.

Therefore, according to the present embodiment, it is possible to improve the accuracy of transmission timing control of an uplink signal.

(Embodiment 5)

Configurations of base station 100 and terminal 200 according to the present embodiment may be, for example, the same as the configurations in Embodiment 1.

In the present embodiment, for example, the epoch time for the satellite ephemeris information and the common TA parameter information of the neighbor cell (or the target cell) may be represented by absolute time (for example, in the format of time).

For example, base station 100 (for example, controller 102) generates the epoch time for the satellite ephemeris information and the common TA parameter information for base station 100 (for example, the serving cell) as the SFN and the subframe number in the same manner as in any of Embodiments 1 to 4.

In the meantime, base station 100 generates the epoch time for satellite ephemeris information and common TA parameter information for a neighbor cell or neighbor base station as information in the format of time. The format of time may be, for example, absolute time, Coordinated Universal Time (UTC), or UNIX (registered trademark) time.

Further, base station 100 (for example, controller 102) may, for example, broadcast time information to terminals 200 that cannot use a GNSS function such as GPS. For example, base station 100 may broadcast to terminals 200 the information including the relationship between SFN timing and time (for example, the start time of the SFN at which SIB9 is transmitted) such as SIB9 defined in 3GPP TS38.331.

In a case where terminal 200 can use the GNSS function, for example, terminal 200 acquires the time information by using the GNSS function. Further, in a case where terminal 200 cannot use the GNSS function, for example, terminal 200 acquires the time information by receiving SIB9.

When terminal 200 receives satellite ephemeris information for a neighbor cell, common TA parameter information, and information on the epoch time corresponding to the satellite ephemeris information for the neighbor cell and the common TA parameter information, terminal 200 interprets the epoch time as the time information.

Thus, terminal 200 can interpret the epoch time appropriately without being conscious of the cell on which the epoch time for the satellite ephemeris information for the neighbor cell and the common TA parameter information indicated by base station 100 is based.

The embodiments of the present disclosure have been each described, thus far.

Note that, in the above-described embodiments, an example in a conditional handover has been described, but the present disclosure is not limited to this example, and the same method can be used in a normal handover or in indication of neighbor cell information for cell selection.

Further, in the above-described embodiments, an operation may vary between in the handover and in the cell selection. For example, base station 100 may indicate to terminal 200 the epoch time based on the SFN and the subframe number of base station 100 (for example, the serving cell) and assistance information (satellite ephemeris, common TA parameter) as information on the neighbor cell for use in cell selection or in neighbor cell measurement, and may indicate to terminal 200 the epoch time based on the SFN and the subframe number of the target base station or the target cell and assistance information (satellite ephemeris, common TA parameter) as information on the target cell for use in the handover. Further, the reference point for the epoch time of the assistance information (satellite ephemeris, common TA parameter) for the neighbor cell to be used for cell selection or neighbor cell measurement may be the synchronization point of the uplink signal in the serving cell, and the reference point for the epoch time of the assistance information (satellite ephemeris, common TA parameter) for the target cell to be used for handover may be the synchronization point of the uplink signal in the target cell. In the case of the cell selection or the neighbor cell measurement, terminal 200 may be in a location where the MIB, PBCH, or SIB of the neighbor cell cannot be received, at the time of receiving these pieces of information from base station 100. Thus, the indication, to terminal 200, of the epoch time, the satellite ephemeris, and the common TA parameter that are based on the SFN and subframe number of the serving cell enables terminal 200 to correctly interpret the information on the epoch time by the SFN and subframe timing of the serving cell and thus appropriately control a measurement window using the information on the satellite ephemeris and the common TA parameter. Meanwhile, in the case of the handover, terminal 200 is highly likely to be located in the vicinity of the neighbor cell. Thus, the indication, to terminal 200, of the epoch time, the satellite ephemeris, and the common TA parameter that are based on the SFN and subframe number of the target cell enables terminal 200 to correctly interpret the information on the epoch time because the information on the SFN and subframe of the target cell can be acquired by the MIB/PBCH of the target cell, and thus to access the target cell using the information on the satellite ephemeris and the common TA parameter.

Note that the above-mentioned information on the neighbor cell for the cell selection or the neighbor cell measurement may be broadcast by an SIB, and the above-mentioned information on the neighbor cell for the handover may be indicated to terminal 200, for example, by RRC control information such as an RRCReconfiguration message.

Further, base station 100 may, for example, indicate to terminal 200 the information on whether the satellite ephemeris information and the common TA parameter information in the neighbor cell are the same as the satellite ephemeris information and the common TA parameter information in the cell of base station 100 (for example, the serving cell).

Further, the satellite ephemeris information and the common TA parameter information may be, for example, indicated as "EpochTime" and "TAInfo" in NTN-Config of SIB19, respectively.

Further, in the above-described embodiments, when the information such as the satellite ephemeris and the common TA parameter is indicated by an SIB to terminal 200, the epoch time may be implicitly indicated by the first subframe (e.g., subframe at the start time point) or last subframe (e.g., subframe at the end time point) of an SI-window in which the SIB is transmitted. In this case, as the information on the neighbor cell, base station 100 indicates, to terminal 200, the epoch time, the satellite ephemeris, and the common TA parameter that are based on the timing of the SFN and/or subframe of base station 100 (e.g., serving cell). Alternatively, when the epoch time, the satellite ephemeris, and the common TA parameter, which are based on the timing of the SFN and/or subframe of base station 100 (i.e., serving cell), is indicated to terminal 200, the epoch time may be implicitly indicated by the first or last subframe of an SI-window in which the SIB is transmitted.

Further, in the above-described embodiments, a cell may be an area defined by received power of an SSB or a Channel State Information-Reference Signal (CSI-RS) transmitted from a base station (or satellite) or may be an area defined by a geographical location. Moreover, the cell in the above-described embodiments may be replaced with a beam defined by the SSB.

Further, in the above-described embodiments, the satellite ephemeris information, which is information on a satellite location, may be broadcast by the system information or held by terminal 200 in advance. The satellite ephemeris information may be updated when communication is possible. Alternatively, terminal 200 may identify a satellite location using information that is different from the satellite ephemeris information.

Further, in the above-described embodiments, a base station may be replaced with a "network."

Further, in the above-described embodiments, a target cell at the time of handover has been described as an example, but the target cell may be replaced with a neighbor cell. Further, the neighbor cell may be replaced with a cell different from the serving cell. Further, one aspect of the present disclosure can be applied not only to handover but also to a neighbor cell measurement for cell selection or cell reselection.

Further, the satellite ephemeris and common TA parameter of the neighbor cell may be indicated by the SIB as the neighbor cell information, and terminal 200 may use these pieces of information at the time of the cell selection or cell reselection in an RRC_IDLE state. Alternatively, at the time of the handover in an RRC_CONNECTED state, the UE-specific RRC control information may indicate, to terminal 200, information indicating which neighbor cell information is used as the target cell information. This can reduce the amount of information for handover indicated to terminal 200.

Further, in the above-described embodiments, terminal 200 may perform the received quality measurement by using other signals such as a CSI-RS, instead of the SSB signal.

Further, in the embodiments described above, an example has been described in which a GNSS such as GPS or the like (e.g., location detection using satellite signal) is used, but the present disclosure is not limited to this, and the following may be performed: location detection by a terrestrial cellular base station; location detection using WiFi (registered trademark) signal or Bluetooth (registered trademark) signal; location detection using an acceleration sensor or the like; or location detection by a combination of these detection methods, for example. Incidentally, altitude information may be acquired from, for example, an atmospheric pressure sensor.

Further, in the above-described embodiments, the uplink transmission from terminal 200 to base station 100 has been described, but an embodiment of the present disclosure is not limited to this and may be applied to data in a downlink from base station 100 to terminal 200 or in a link between terminals 200 (e.g., sidelink). Further, in the above-described embodiments, the RACH signal transmission has been described as an example of the uplink transmission, but the transmission target is not limited to RACH and may be other signals or channels.

An embodiment of the present disclosure is also applicable for any type of satellite such as a Geostationary Earth Orbit satellite (GEO), medium earth orbit satellite (MEO), LEO, or highly elliptical orbit satellite (HEO). Further, an embodiment of the present disclosure may be applied to non-terrestrial communication such as communication performed by a HAPS or a drone base station.

Further, in the above embodiments, descriptions have been given by taking the NTN environment (e.g., satellite communication environment) as an example, but the present disclosure is not limited to this. The present disclosure may be applied to other communication environments (e.g., at least one terrestrial cellular environment in LTE and NR). For example, an embodiment of the present disclosure may be applied to terrestrial communication in an environment where the cell size is large and the propagation delay between base station 100 and terminal 200 is longer (e.g., equal to or longer than threshold), for example. In addition, an embodiment of the present disclosure may be applied not only to the NTN but also to communication to which handover or cell selection is applied.

Further, in the above-described embodiment, the satellite communication may have a configuration in which the base station functionality is on the satellite (e.g., "regenerative satellite"), or a configuration in which the base station functionality is on the ground and the satellite relays the communication between the base station and a terminal (e.g., "transparent satellite"). In other words, in an embodiment of the present disclosure, for example, the downlink and uplink may be a link between a terminal and the satellite or a link via the satellite.

The parameters in the above-described embodiments are examples and may include other values. For example, an SFN of epoch time, a subframe number of the epoch time, and the number of frames of one cycle of the SFN are not limited to the values given in the above-mentioned examples. Further, the reference point for the epoch time is not limited to any of the gNB and the satellite, and may be another point.

A method for indicating control information from base station 100 to terminal 200 is not limited to the above-mentioned examples, and the control information may be indicated (or broadcast, instructed, configured) by at least one of system information such as an MIB and an SIB, RRC control information, MAC control information, and downlink control information (DCI), may be previously configured for terminal 200, or may be defined by standards in advance.

The base station may be referred to as a gNodeB or a gNB. Further, the terminal may be referred to as UE.

Time resource units, such as system frames or subframes, may be replaced with slots, time slots, mini slots, frames, or subframes.

Further, any component with a suffix, such as "-er," "-or," or "-ar" in the above-described embodiments may be replaced with other terms such as "circuit (circuitry)," "device," "unit," or "module."

(Supplement)

Information indicating whether terminal 200 supports the functions, operations, or processing described in the above embodiments may be transmitted (or indicated) from terminal 200 to base station 100 as capability information or capability parameter(s) of terminal 200, for example.

The capability information may include an information element (IE) individually indicating whether terminal 200 supports at least one of the functions, operations, and processing described in the above embodiments. Alternatively, the capability information may include an information element indicating whether terminal 200 supports a combination of any two or more of the functions, operations, and processing described in the above embodiments.

Base station 100, for example, may determine (decide or assume), based on the capability information received from terminal 200, the functions, operations, and processing supported (or unsupported) by terminal 200 that has transmitted the capability information. Base station 100 may perform operations, processing, or control in accordance with a determination result based on the capability information. For example, base station 100 may control communication for NTN, based on the capability information received from terminal 200.

Note that the fact that terminal 200 does not support some of the functions, operations, or processing described in the above embodiment may be interpreted as limitation on such functions, operations, or processing in terminal 200. For example, information or a request related to such limitation may be indicated to base station 100.

Information on the capability or limitation of terminal 200 may be, for example, defined by standards, or implicitly indicated to base station 100 in association with information known in base station 100 or information transmitted to base station 100.

(Control Signal)

In the present disclosure, a downlink control signal (or downlink control information) related to an exemplary embodiment of the present disclosure may be a signal (or information) transmitted through a Physical Downlink Control Channel (PDCCH) of the physical layer, for example, or may be a signal (or information) transmitted through a Medium Access Control Control Element (MAC CE) or the Radio Resource Control (RRC) of a higher layer. Further, the signal (or information) is not limited to that indicated by the downlink control signal, but may be predefined in the specifications (or standard) or may be pre-configured for the base station and the terminal.

In the present disclosure, an uplink control signal (or uplink control information) relating to an exemplary embodiment of the present disclosure may be, for example, a signal (or information) transmitted through a PUCCH of the physical layer or a signal (or information) transmitted through the MAC CE or RRC of the higher layer. Further, the signal (or information) is not limited to that indicated by the uplink control signal, and may be predefined in the specifications (or standard) or may be pre-configured for the base station and the terminal. The uplink control signal may be replaced with, for example, uplink control information (UCI), 1st stage sidelink control information (SCI), or 2nd stage SCI.

(Base Station)

In an exemplary embodiment of the present disclosure, the base station may be a Transmission Reception Point (TRP), a cluster head, an access point, a Remote Radio Head (RRH), an eNodeB (eNB), a gNodeB (gNB), a Base Station (BS), a Base Transceiver Station (BTS), a master device, a gateway, or the like. Further, in sidelink communication, a terminal may play a role of the base station. Alternatively, the base station may be replaced with a relay device that relays communication between a higher node and a terminal, or may be replaced with a roadside device.

(Uplink/Downlink/Sidelink)

An exemplary embodiment of the present disclosure may be applied to, for example, any of uplink, downlink, and sidelink. For example, an exemplary embodiment of the present disclosure may be applied to a Physical Uplink Shared Channel (PUSCH), a Physical Uplink Control Channel (PUCCH), and a Physical Random Access Channel (PRACH) in the uplink, a Physical Downlink Shared Channel (PDSCH), PDCCH or a Physical Broadcast Channel (PBCH) in the downlink, or a Physical Sidelink Shared Channel (PSSCH), a Physical Sidelink Control Channel (PSCCH), a Physical Sidelink Broadcast Channel (PSBCH) in the sidelink.

Note that PDCCH, PDSCH, PUSCH and PUCCH are examples of a downlink control channel, a downlink data channel, an uplink data channel, and an uplink control channel, respectively. PSCCH and PSSCH are examples of a sidelink control channel and a sidelink data channel. Further, PBCH and PSBCH are examples of broadcast channels, and PRACH is an example of a random access channel.

(Data Channel/Control Channel)

An exemplary embodiment of the present disclosure may be applied to, for example, either of a data channel or a control channel. For example, a channel in an exemplary embodiment of the present disclosure may be replaced with a data channel including any of PDSCH, PUSCH, and PSSCH or a control channel including any of PDCCH, PUCCH, PBCH, PSCCH, and PSBCH.

(Reference Signal)

In an exemplary embodiment of the present disclosure, a reference signal is a signal known to both of a base station and a mobile station, for example, and may also be referred to as a Reference Signal (RS) or a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

(Time Intervals)

In an exemplary embodiment of the present disclosure, the units of time resources are not limited to one or a combination of slots and symbols, but may be, for example, time resource units such as frames, superframes, subframes, slots, time-slot subslots, minislots, or symbols, Orthogonal Frequency Division Multiplexing (OFDM) symbols, Single Carrier-Frequency Division Multiplexing (SC-FDMA) symbols, or other time resource units. The number of symbols included in one slot is not limited to any number of symbols exemplified in the above-described embodiments, and may be another number of symbols.

(Frequency Band)

An exemplary embodiment of the present disclosure may be applied to either a licensed band or an unlicensed band.

(Communication)

An exemplary embodiment of the present disclosure may be applied to any of communication between a base station and a terminal (Uu-link communication), communication between a terminal and a terminal (Sidelink communication), and Vehicle to Everything (V2X) communication. For example, a channel in an exemplary embodiment of the present disclosure may be replaced with any of PSCCH, PSSCH, Physical Sidelink Feedback Channel (PSFCH), PSBCH, PDCCH, PUCCH, PDSCH, PUSCH, and PBCH.

In addition, an exemplary embodiment of the present disclosure may be applied to either of a terrestrial network or a network other than the terrestrial network (Non-Terrestrial Network (NTN)) using a satellite or a High Altitude Pseudo Satellite (HAPS). In addition, the present disclosure may be applied to a network having a large cell size, and a terrestrial network with a large delay compared with a symbol length or a slot length, such as an ultrawideband transmission network.

(Antenna Ports)

In an exemplary embodiment of the present disclosure, an antenna port refers to a logical antenna (antenna group) formed of one physical antennas or a plurality of physical antennas. For example, the antenna port does not necessarily refer to one physical antenna, and may refer to an array antenna formed of multiple antennas or the like. For example, it is not defined how many physical antennas from the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

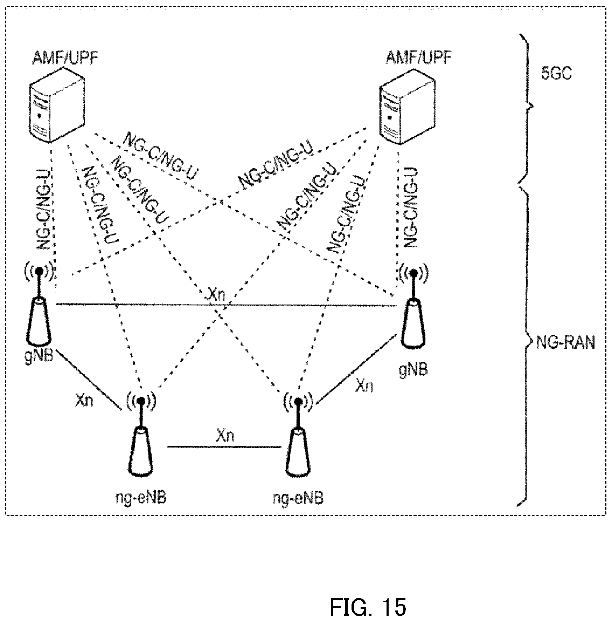

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 15 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

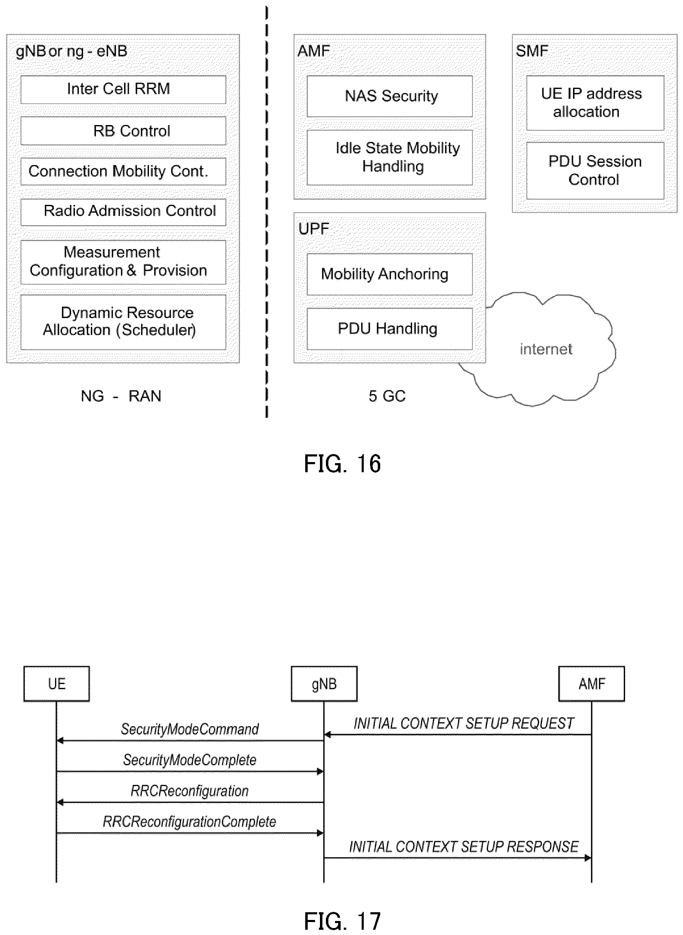

FIG. 16 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));

- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

FIG. 17 illustrates some interactions between a UE, gNB, and AMF (a 5GC Entity) performed in the context of a transition of the UE from RRC_IDLE to RRC_CONNECTED for the NAS part (see TS 38 300 v15.6.0).
RRC is higher layer signaling (protocol) used for UE and gNB configuration. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

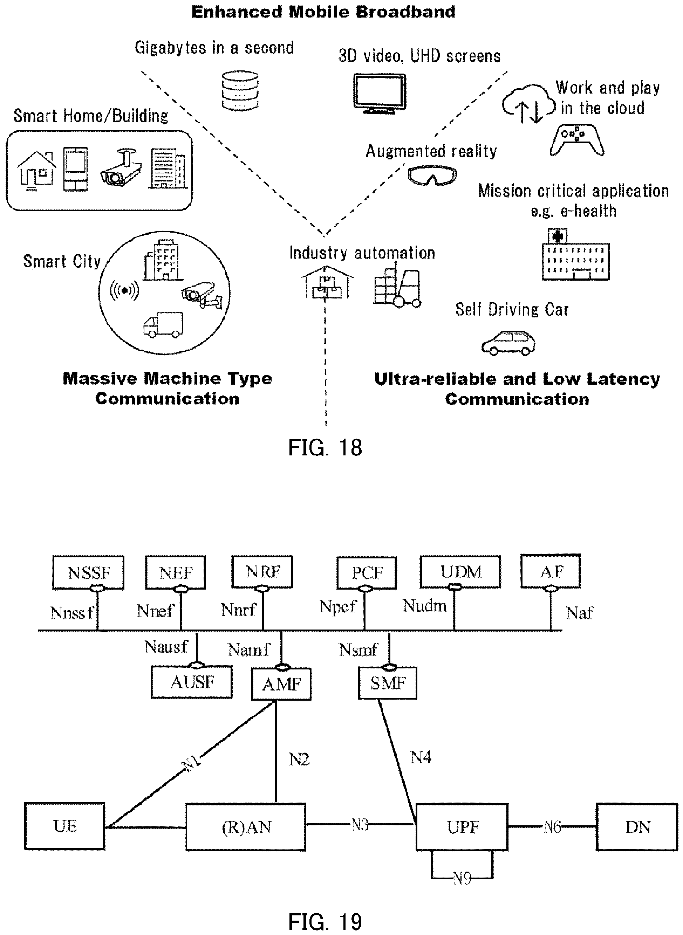

FIG. 18 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 18 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and missioncritical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 17. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

FIG. 19 illustrates a 5G NR non-roaming reference architecture (see TS 23.501 v16.1.0, section 4.23). An Application Function (AF) ( e.g., an external application server hosting 5G services, exemplarily described in FIG. 18) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 19 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to one exemplary embodiment of the present disclosure includes: reception circuitry, which, in operation, receives, in a first cell, control information on a reference point for a reference time in control on a transmission timing for an uplink signal to a second cell that is different from the first cell; and control circuitry, which, in operation, controls the transmission timing based on the control information.

In one exemplary embodiment of the present disclosure, the control information indicates in which of the first cell and the second cell the reference point is a synchronization point of the uplink signal.

In one exemplary embodiment of the present disclosure, the reception circuitry receives information indicating on which of the first cell and the second cell the reference time is based.

In one exemplary embodiment of the present disclosure, in a case where the information on the control on the transmission timing is generated at a base station of the second cell, the control information indicates that the reference point is a point at which the uplink signal is synchronized in the second cell.

In one exemplary embodiment of the present disclosure, in a case where the information on the control on the transmission timing is generated at an apparatus different from a base station of the second cell, the control information indicates that the reference point is a point at which the uplink signal is synchronized in the first cell.

In one exemplary embodiment of the present disclosure, the reference time for the second cell is represented by an absolute time.

A base station according to one exemplary embodiment of the present disclosure includes: control circuitry, which, in operation, determines, in a first cell, control information on a reference point for a reference time in control on a transmission timing for an uplink signal to a second cell that is different from the first cell; and transmission circuitry, which, in operation, transmits the control information.

In a communication method according to one exemplary embodiment of the present disclosure, a terminal receives, in a first cell, control information on a reference point for a reference time in control on a transmission timing for an uplink signal to a second cell that is different from the first cell; and controls the transmission timing based on the control information.

In a communication method according to one exemplary embodiment of the present disclosure, a base station determines, in a first cell, control information on a reference point for a reference time in control on a transmission timing for an uplink signal to a second cell that is different from the first cell; and transmits the control information.

Industrial Applicability

An aspect of the present disclosure is useful for radio communication systems.

Reference Signs List

100 Base station
101 Data generator
102 Controller
103, 206 Data transmission processor
104, 207 Radio transmitter
105, 201 Antenna
106, 202 Radio receiver
107, 203 Data reception processor
200 Terminal

204 Location-information acquirer
205 Timing adjuster
300 NTN control apparatus

**Claims**

1. A terminal, comprising:

   reception circuitry, which, in operation, receives, in a first cell, control information on a reference point for a reference time in control on a transmission timing for an uplink signal to a second cell that is different from the first cell; and
   control circuitry, which, in operation, controls the transmission timing based on the control information.

2. The terminal according to claim 1, wherein
   the control information indicates in which of the first cell and the second cell the reference point is a synchronization point of the uplink signal.

3. The terminal according to claim 1, wherein
   the reception circuitry receives information indicating on which of the first cell and the second cell the reference time is based.

4. The terminal according to claim 1, wherein
   in a case where the information on the control on the transmission timing is generated at a base station of the second cell, the control information indicates that the reference point is a point at which the uplink signal is synchronized in the second cell.

5. The terminal according to claim 1, wherein
   in a case where the information on the control on the transmission timing is generated at an apparatus different from a base station of the second cell, the control information indicates that the reference point is a point at which the uplink signal is synchronized in the first cell.

6. The terminal according to claim 1, wherein
   the reference time for the second cell is represented by an absolute time.

7. A base station, comprising:

   control circuitry, which, in operation, determines, in a first cell, control information on a reference point for a reference time in control on a transmission timing for an uplink signal to a second cell that is different from the first cell; and
   transmission circuitry, which, in operation, transmits the control information.

8. A communication method by a terminal, comprising:

   receiving, in a first cell, control information on a reference point for a reference time in control on a transmission timing for an uplink signal to a second cell that is different from the first cell; and
   controlling the transmission timing based on the control information.

9. A communication method by a base station, comprising:

   determining, in a first cell, control information on a reference point for a reference time in control on a transmission timing for an uplink signal to a second cell that is different from the first cell; and
   transmitting the control information.

Satellite location can be derived from
satellite ephemeris information

Estimated by
common TA
parameters

Movement
7.6 km/s

Satellite

Estimated by satellite and
UE location

Service link

Feeder link

gNB

UE

UE obtain its location from GNSS

FIG. 1

FIG. 2

FIG. 3

<u>100</u>

```
┌──────────────┐          ┌──────────────┐
│  CONTROLLER  │ ───────▶ │ TRANSMITTER  │
└──────────────┘          └──────────────┘
```

FIG. 4

<u>200</u>

```
┌──────────────┐          ┌──────────────┐
│  CONTROLLER  │ ◀─────── │   RECEIVER   │
└──────────────┘          └──────────────┘
```

FIG. 5

FIG. 6

FIG. 7

FIG. 8

FIG. 9

EP 4 513 990 A1

FIG. 10

FIG. 11

EP 4 513 990 A1

FIG. 12

FIG. 13

EP 4 513 990 A1

Sat 1

RP

gNB1
(serving/source gNB)

Info. on Sat1, Sat2

UE

Cell 1

Cell 2

NTN control center

generate assistance information

Info. on Sat1, Sat2

Sat 2

gNB2
(neighbor/target gNB)

FIG. 14

FIG. 15

| gNB or ng - eNB | AMF | SMF |
|---|---|---|
| Inter Cell RRM | NAS Security | UE IP address allocation |
| RB Control | Idle State Mobility Handling | PDU Session Control |
| Connection Mobility Cont. | | |
| Radio Admission Control | UPF | |
| Measurement Configuration & Provision | Mobility Anchoring | |
| Dynamic Resource Allocation (Scheduler) | PDU Handling | internet |

NG - RAN     5 GC

## FIG. 16

UE          gNB          AMF

SecurityModeCommand          INITIAL CONTEXT SETUP REQUEST

SecurityModeComplete

RRCReconfiguration

RRCReconfigurationComplete

INITIAL CONTEXT SETUP RESPONSE

## FIG. 17

## Enhanced Mobile Broadband

Gigabytes in a second

3D video, UHD screens

Smart Home/Building

Work and play in the cloud

Augmented reality

Mission critical application e.g. e-health

Smart City

Industry automation

Self Driving Car

**Massive Machine Type Communication**

**Ultra-reliable and Low Latency Communication**

FIG. 18

FIG. 19

## INTERNATIONAL SEARCH REPORT

International application No.

**PCT/JP2022/018501**

### A. CLASSIFICATION OF SUBJECT MATTER

*H04W 56/00*(2009.01)i; *H04W 36/08*(2009.01)i; *H04W 84/06*(2009.01)i
FI:  H04W56/00 130; H04W36/08; H04W84/06

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | PANASONIC. Enhancements on UL time and frequency synchronization [online]. 3GPP TSG RAN WG1 #108-e R1-2201387. 14 February 2022, pp. 1-16 sections 1, 3, 7, fig. 1 | 1, 4-9 |
| Y | sections 1, 3, 7, fig. 1 | 2-3 |
| Y | Moderator (THALES). FL Summary #4: Maintenance on UL time and frequency synchronization for NR NTN [online]. 3GPP TSG RAN WG1 #108-e R1-2202908. 04 March 2022, pp. 65-75 section 13 | 2-3 |
| T | PANASONIC. Maintenance on Solutions for NR to support non-terrestrial networks (NTN). 3GPP TSG RAN WG1 #109-e R1-2203289. 20 May 2022, pp. 1-7 section 5.2 | 1-9 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 July 2022** | **19 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Solutions for NR to support non-terrestrial networks (NTN) (Release 16). *3GPP, TR 38.821, V16.1.0*, May 2021